# EUROPEAN PATENT APPLICATION

(11) **EP 1 408 625 A2**
(43) Date of publication of application: **14.04.2004**
(21) Application number: 03022810.0
(22) Date of filing: 07.10.2003
(51) Int. Cl.: H04B 7/08, H04L 27/26

(54) **Diversity receiver and diversity receiving method for FDM signals**

(30) Priority: 11.10.2002 JP 2002298419; 18.11.2002 JP 2002333207
(71) Applicant: MATSUSHITA ELECTRIC INDUSTRIAL CO., LTD., Kadoma-shi, Osaka 571-8501 (JP)
(72) Inventor: Kisoda, Akira, Moriguchi-City, Osaka Pref. 570-0015 (JP); Taniguchi, Tomohiko, Osaka-Ciy, Osaka Pref. 538-0035 (JP); Mizoguchi, Yoshitaka, Fukuoka City, Fukuoka Pref. 814-0022 (JP); Yagi, Tetsuya, Katano-City, Osaka Pref. 576-0052 (JP)
(74) Representative: Kirschner, Klaus Dieter, Dipl.-Phys.

(57) **Abstract**

In a diversity receiver comprising an AGC section for controlling the gain of a tuner, an equalizer equalizes an outputted signal from a fast Fourier transformer. A reliability calculator calculates the reliability value of each of carriers by an equalized pilot signal obtained from the equalizer. A reliability value corrector corrects the reliability value by outputted information from the AGC section. A carrier selecting/combining section performs one of selecting and weighting combining for the carrier in a branch in accordance with the corrected reliability value. When a Viterbi decoder is provided, the Viterbi decoder weights an output from the carrier selecting/combining section with a new reliability value to perform maximum likelihood decoding. It is possible to prevent a reliability value which does not reflect an actually received power from being calculated as a result of increasing a power by an AGC in spatial diversity for every OFDM or FDM demodulated carrier. Even in the case of mobile reception, data with high reliability can be decoded.

## Description

### BACKGROUND OF THE INVENTION

### 1. Field of the Invention

The present invention relates to a diversity receiver which receives a signal subjected to frequency division multiplexing (FDM) by using two or more branches, and a diversity receiving method.

### 2. Discussion of the Related Art

In Japan, digital terrestrial television services will start in the latter half of 2003. Orthogonal frequency division multiplexing (OFDM) is utilized as a modulation scheme in the digital terrestrial television (ISDB-T) standard. In accordance with the OFDM, a large number of orthogonal carriers are modulated by digital data for transmission, modulated waves are multiplexed and then transmitted. An OFDM transmitted signal is provided with a guard interval formed by copying a part of transmitted waveform. Thus, if there exists a multipath within the guard interval, deterioration of reception quality can be reduced.

Nevertheless, OFDM receivers that have been proposed cannot handle Doppler shift perfectly occurred at the time of mobile reception and neither the deterioration of reception characteristic under fading environment. Generally, a diversity reception method is a method for improving the reception characteristic under an multi-path environment or in a mobile reception.

Deterioration of the reception characteristic such as a multipath or a fading easily occurs in the terrestrial propagation environment. Hence, in ISDB-T, error resistance increased by utilizing time interleaving as well as a concatenated code of a convolutional code and Reed-Solomon code.

In the period that broadcasting shifts from analog to digital, frequencies are utilized in congestion. Thus, influences from the analog broadcasting, to digital broadcasting i.e., so-called co-channel interferences or adjacent channel interferences are expected. In order to reduce such influences of interferences, there proposed a carrier dissipation method that the reliability value of an interfered carrier is set to zero or a method for performing a soft decision Viterbi decoding on the basis of the reliability value of the carrier depending on a degree of interferences.

As a diversity receiving method, in conventional analog television broadcasting, a method for selecting, among radio frequency (RF) signals received by a plurality of receiving antennas, the receiving antenna with the maximum power and demodulating a signal has been mainly utilized. This method is referred to as an antenna switching diversity.

On the other hand, in accordance with the digital television broadcasting utilizing an OFDM transmission system, in addition to the conventional antenna switching diversity, a carrier diversity that performs selecting or weighting combining on a carrier of an OFDM signal basis may be used. In accordance with the carrier diversity, a plurality of antennas are provided and carriers are individually demodulated in branches. Selecting or weighting combining is performed upon the individually demodulated carrier with its power being a reference. It is known that this carrier diversity exhibits superior effects to those of the antenna switching diversity. Such example is disclosed in Japanese Unexamined Patent Publication No. 2001-156738.

A reliability value can be calculated by utilizing an average power of a scattered pilot signal (SP signal) periodically inserted between data carriers for an OFDM signal. This reliability value is commonly used for Viterbi decoding and diversity.

In the Viterbi decoding, if it is determined that bit streams inputted to a Viterbi decoder have low reliabilities, correct decoding cannot be performed; thus, miss correction of error may be performed. For this reason, the reliability value is desirably calculated so as to have a certain degree of reliability even if the power of continuously received data is low.

In the case of carrier diversity, comparison or combining for carriers is performed between a plurality of non-correlatively varying branches. Thus, the reliability value desirably reflects a received absolute power.

Nevertheless, when the above-described diversity for each carrier is performed, reception characteristics in the case of utilizing the carrier diversity may happen to be inferior to those of the case of not utilizing the carrier diversity depending on the state of reception. For example, assume that during reception by carrier diversity formed of two antennas, the reception state of one antenna becomes significantly worse and the reception state of the other antenna is excellent. Under such a state, the reception characteristics in the case of reception utilizing carrier diversity may be deteriorated as compared to the reception characteristics in the case of reception using only the antenna with excellent reception state. If a certain or larger difference in the reception state is generated between the two antennas, the reception characteristics in the case of performing the carrier diversity may be deteriorated.

The causes for the aforementioned states are mainly considered as follows. In the diversity for each carrier, a reliability value is calculated from the power of a carrier subjected to FFT and, then, selecting or weighting combining for signal is performed in accordance with this reliability value. However, assume that in tuners A and B for two branches, the received power of the tuner B continues to be smaller, the power may be increased by AGC (Automatic Gain Control). For this reason, a low reliability value should be originally calculated in this branch, but a high reliability value is calculated.

Then, even if the tuner A receives a large power and can receive successfully, when a carrier with originally small received power is provide in the tuner B, the carrier diversity performing selecting or weighting combining may even further deteriorate the reception characteristics.

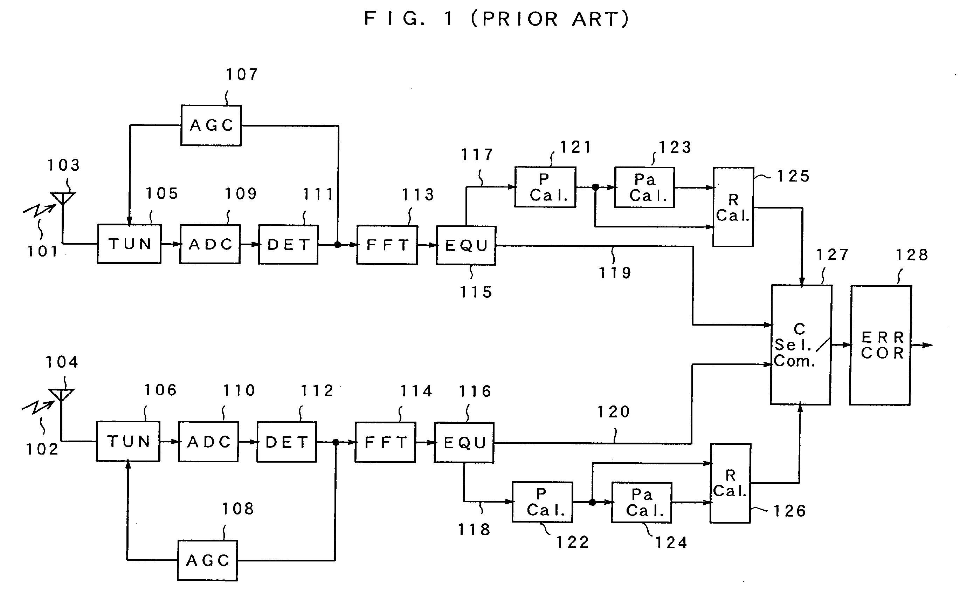

The above-described problematic points will be specifically studied with reference to Fig. 1 with respect to the function of a conventional OFDM diversity receiver. An OFDM diversity receiver illustrated in Fig. 1 receives OFDM signals at two series of antennas (branches), respectively, and performs diversity upon demodulated carriers.

OFDM signals 101, 102 reach antennas 103, 104, respectively. Tuners 105, 106 perform tuning. Automatic gain controls (AGC) 107, 108 control gains of the tuners 105, 106 on the basis of outputs from orthogonal detectors (DET), or quadrature demodulator 111, 112 to control output amplitudes in a certain range. When a received power is small, the AGC 107, 108 increase the gains of the tuners. On the other hand, when the received power is large, they decrease the gains of the tuners.

Analog-digital converters (ADC) 109, 110 convert analog signals outputted from the tuners 105, 106 into digital signals. The orthogonal detectors (DET) 111, 112 perform orthogonal modulation upon outputs from the ADC 109, 110 to convert into complex signals.

Fourier transformers (FFT) 113, 114 convert the OFDM signals respectively received via the antennas 103, 104 from time domain signals into frequency domain signals. A carrier after FFT includes a data carrier which includes ordinary data and a scattered pilot signal inserted for every fixed interval (which will be referred to as an SP signal hereinafter).

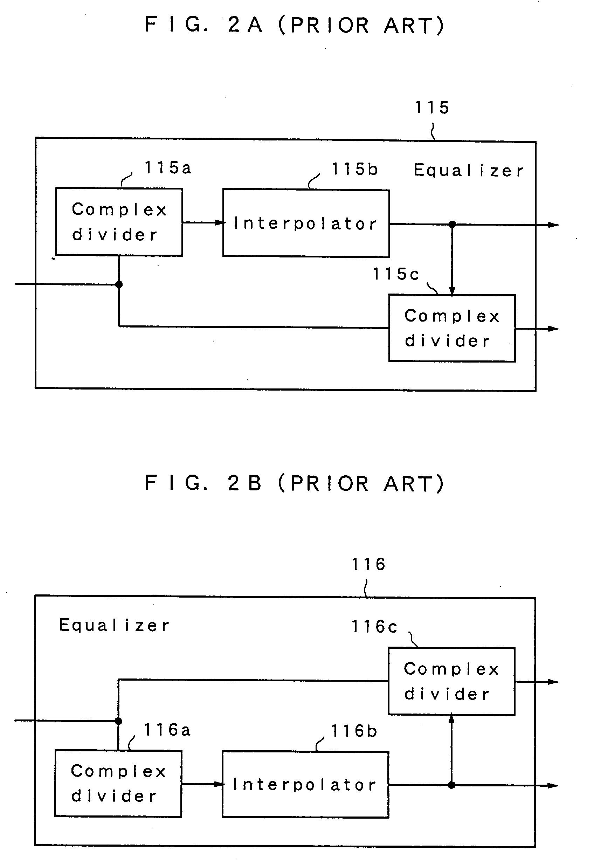

Equalizers (EQU) 115, 116 estimate channel characteristics of the respective branches by using SP signals. The equalizer 115 is configured as illustrated in Fig. 2A. The equalizer 116 is configured as illustrated in Fig. 2B. The amplitude and phase of an SP signal are known. For this reason, at the receiving end, by complex-dividing SP signals received by complex dividers 115a, 116a by a known SP signal, channel characteristics in positions of the respective SP signals can be calculated. Interpolators 115b, 116b interpolate the resultant channel characteristics in time and frequency directions in order to calculate channel characteristics in signal positions for all carriers. Complex dividers 115c, 116c complex-divide data carriers by using the channel characteristics calculated in the interpolators 115b, 116b to equalize carriers.

Referring to Fig. 1, the equalizer 115 outputs a channel characteristic 117 and a carrier 119 in the series of the antenna 103 (branch 1). The equalizer 116 outputs a channel characteristic 118 and a carrier 120 in the series of the antenna 104 (branch 2).

Power calculators (P cal.) 121, 122 calculate the power of the channel characteristic for each carrier by using the channel characteristics respectively outputted from the equalizers 115, 116. Average power calculators (Pa cal.) 123, 124 calculate an accumulative average on the basis of the calculated channel characteristic power to determine an average power. This average power serves as a reference for calculating a reliability value of each carrier.

Reliability calculators (R cal.) 125, 126 calculate a reliability value of each carrier by dividing the channel characteristic power for each carrier by the average power. Alternatively, the reliability calculators 125, 126 may set an arbitrary threshold with the average power being a reference and compare the channel characteristic power for each carrier to this threshold to calculate a reliability value.

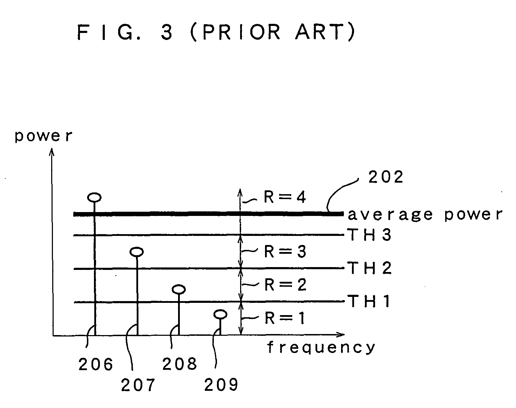

Fig. 3 illustrates the aforementioned method for calculating a reliability value R by comparing the threshold with a channel characteristic power for each carrier. Referring to Fig. 3, a reference numeral 202 indicates an average power serving as the reference for a threshold (TH). Thresholds 1, 2 and 3 are set on the basis of the average power. In Fig. 3, values less than the threshold 1 have 1 of reliability value R. Values in the range of the threshold 1 to the threshold 2 have 2 of the reliability value R. Values in the range of the threshold 2 to the threshold 3 have 3 of the reliability value R. Values larger than the threshold 3 have 4 of the reliability value R. Herein, the larger the power becomes, the larger the reliability value becomes.

Fig. 3 illustrates channel characteristic power values of carriers 206, 207, 208 and 209. By comparing such powers with the thresholds, the reliability value R is calculated. For example, the reliability value R of the carrier 206 is calculated to be 4. The reliability values R of the carriers 207, 208 and 209 are calculated to be 3, 2 and 1, respectively. The reliability calculators 125, 126 shown in Fig. 1 calculate the reliability value as described above and output the results to a carrier selecting/combining section (C sel./com.) 127. The equalizers 115, 116 output the carriers 119, 120 to the carrier selecting/combining section 127.

The carrier selecting/combining section 127 selects a carrier with higher reliability value among the inputted carriers of the branches 1 and 2 on the basis of these reliability values or performs weighting combining depending on the reliability values. An error corrector (ERR COR) 128 performs error correction upon carriers subjected to these processings.

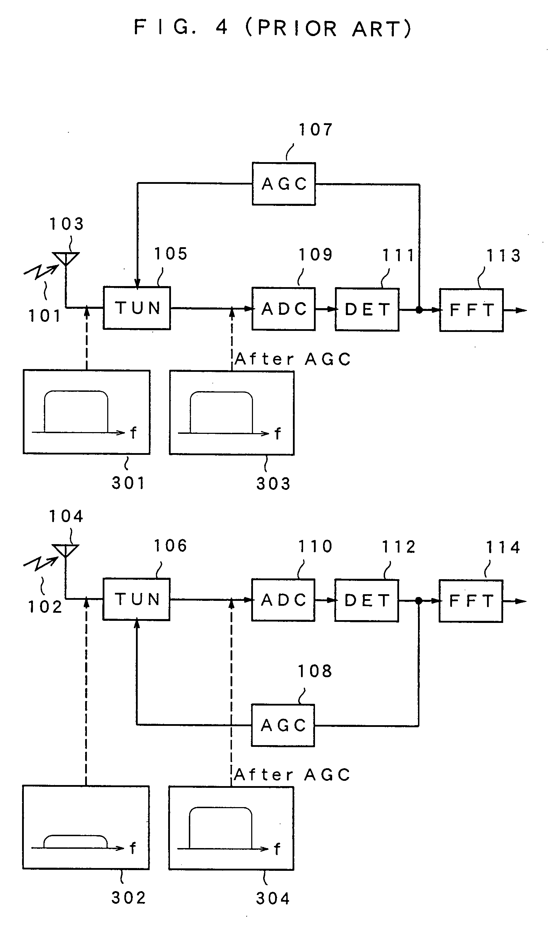

Another problem occurred in the conventional diversity receiver will be described with reference to Fig. 4. Referring to Fig. 4, blocks having the same functions those of Fig. 1 will be denoted by the same reference numerals. The power received by an OFDM signal may vary because of various of factors. For example, reception in the branch 1 may be excellent but reception in the branch 2 may be inferior. The state that is opposite to such state may occur.

A reference numeral 301 indicates a spectrum of power received in the branch 1. Under this state, the power is sufficient. A reference numeral 302 illustrates a spectrum of power received in the branch 2. In this case, the received power is small. Even if the received power is small, the power may be increased within the range that the AGC can follow. Thus, it is determined that the power is large at the time of calculating a reliability value. Such condition can be applied to spectrums indicated by reference numerals 303 and 304. As a result, although the received power is originally small, the reliability value is calculated to be high. Namely, there arises a problem that a reliability which does not reflect an actually received power is calculated.

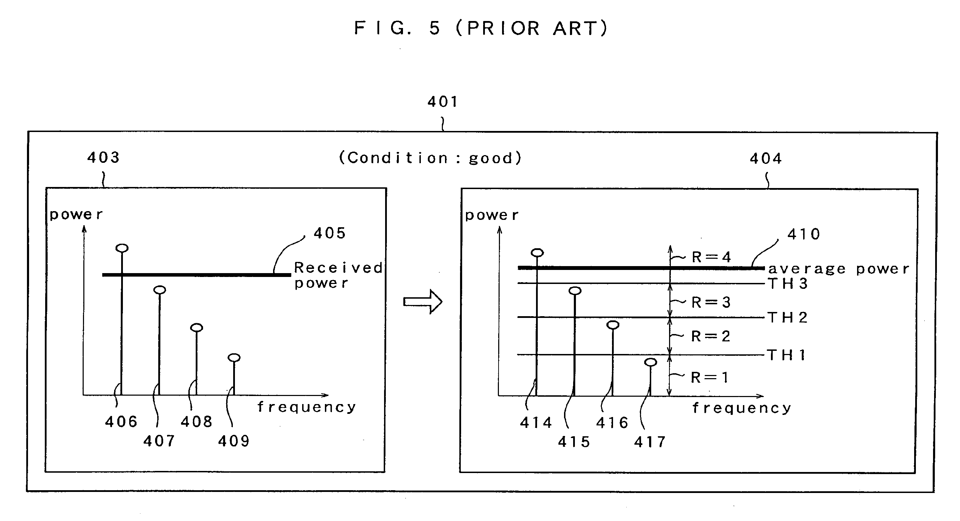

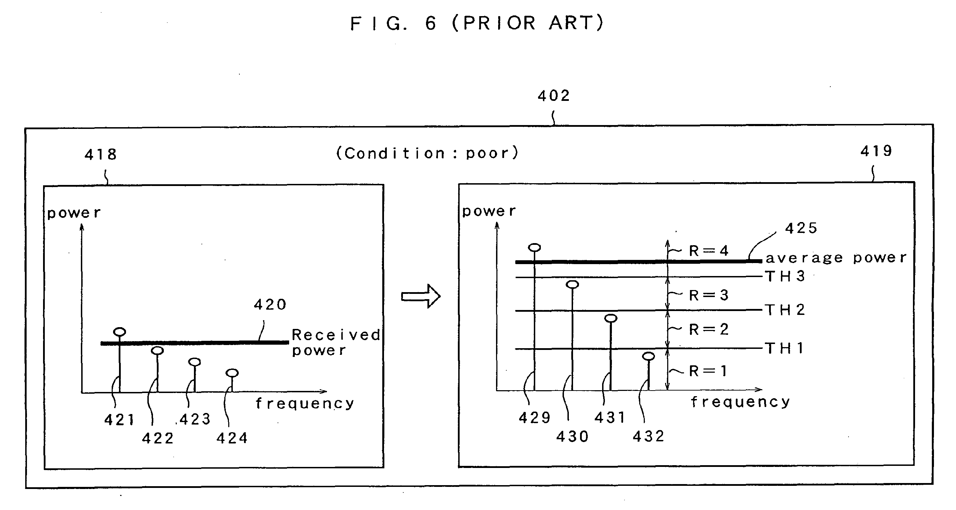

The aforementioned problem at the time of calculating a reliability value will be described with reference to Figs. 5 and 6. A reference numeral 401 in Fig. 5 illustrates the state of carriers at the time of being received and at the time of being subjected to a demodulation processing in the branch 1. A reference numeral 402 in Fig. 6 illustrates the state of carriers at the time of being received and at the time of being subjected to the demodulation processing in the branch 2. A reference numeral 403 in Fig. 5 illustrates the state of reception of an antenna in the branch 1, and a received power 405 of carriers 406 to 409 is large. The reference numeral 404 shows average power 410 after demodulation with AGC control. Because the received power is large, the power is not increased by the AGC as shown by a reference numeral 404. Results 414 to 417 of calculation of reliability values for the carriers 406 to 409 calculated in the reliability calculator 125 reflect the power received in the antenna.

Referring to Fig. 6, a reference numeral 418 illustrates a power received by an antenna in the branch 2. The reference numeral 419 shows average power 425 after demodulation with AGC control. A received power 420 is small. Nevertheless, results 429 to 432 of calculation of reliability values for carriers 421 to 424 become high because the power is increased by the AGC. As a result, there provided an inconsistency that the same reliability values as those of the branch 1 are calculated for carriers in the branch 2 with smaller received power than that of the branch 1.

In accordance with the reliability values calculated by such processing, carriers for the branch 1 are determined to have the same reliability values as those of carriers for the branch 2, and the carriers for the branch 1 are combined with the carriers for the branch 2 at the same ratio. As a result, there arises a problem that characteristics may become worse by diversity.

### SUMMARY OF THE INVENTION

A diversity receiver of the present invention prevents a reliability value which does not reflect an actually received power from being calculated as the result of increasing a power by AGC in spatial diversity for each carrier for FDM demodulation, and performs one of selecting and combining upon a carrier with higher reliability value even in a case of inferior C/N. The AGC controls the gain of a tuner receiving a frequency division multiplexing signal and outputs an AGC value obtained by the gain control for each branch. A detector detects an FDM signal obtained by the tuner for each of the branches. A fast Fourier transformer converts the detected output obtained by the detector, by using fast Fourier transform, from a time domain into a frequency domain to output a carrier including a pilot signal for each of the branches. An equalizer equalizes the carrier obtained by the fast Fourier transformer by using the pilot signal and estimates the channel characteristic of the carrier for each of the branches. A reliability calculator calculates a reliability value for each carrier by the pilot signal outputted from the equalizer and an AGC value outputted by the AGC. A carrier selecting/combining section performs one of selecting and weighting combining upon each carrier in accordance with the reliability value from the reliability calculator.

Further, a diversity receiver of the present invention calculates a reliability value which is suitable for Viterbi decoding and a reliability value which is suitable for diversity to improve the performance of diversity receiving. A reference value calculator calculates, from a received signal power, a first reference value for diversity and a second reference value for Viterbi decoding for each of branches. A first reliability calculator calculates, for each of the branches, a first reliability value used for diversity from the first reference value. A second reliability calculator calculates, for each of carriers, a second reliability value used for Viterbi decoding from the second reference value. A carrier selecting/combining section performs one of selecting and weighting combining for each carrier in accordance with the first reliability value for each of the branches. A Viterbi decoder weights an output from the carrier selecting/combining section with the second reliability value and performs maximum likelihood decoding.

### BRIEF DESCRIPTION OF THE DRAWINGS

Fig. 1 is a block diagram illustrating the structure of a conventional diversity receiver.
Fig. 2A is a structural diagram of a first equalizer used in diversity receivers according to a conventional example and first to sixth embodiments.
Fig. 2B is a structural diagram of a second equalizer used in the diversity receivers according to the conventional example and the first to sixth embodiments.
Fig. 3 is a schematic diagram illustrating a method for calculating a reliability value in the diversity receiver of the conventional example.
Fig. 4 is a schematic diagram illustrating problems about that power is increased in AGC in the diversity receiver of the conventional example.
Fig. 5 is a schematic diagram (1) illustrating problems at the time of calculating a reliability value caused by an increase in power at AGC in the diversity receiver according to the conventional example.
Fig. 6 is a schematic diagram (2) illustrating problems at the time of calculating a reliability value caused by an increase in power at AGC in the diversity receiver according to the conventional example.
Fig. 7 is a block diagram illustrating the structure of a diversity receiver according to a first embodiment of the present invention.
Fig. 8 is a functional block diagram illustrating the operation for correcting a reliability value in the first embodiment.
Fig. 9A illustrates a first correction table used for correcting a reliability value in the first embodiment.
Fig. 9B illustrates a second correction table used for correcting a reliability value in the first embodiment.
Fig. 10 is a block diagram illustrating the structure of a diversity receiver according to a second embodiment of the present invention.
Fig. 11 is a functional block diagram illustrating the operation for correcting a reliability value in the second embodiment.
Fig. 12 is a block diagram illustrating the structure of reliability correctors according to the second embodiment.
Fig. 13 is a block diagram illustrating the structure of a diversity receiver (1) according to a third embodiment of the present invention.
Fig. 14 is a block diagram illustrating the structure of a diversity receiver (2) according to the third embodiment of the present invention.
Fig. 15 is a block diagram illustrating the structure of a diversity receiver (1) according to a fourth embodiment of the present invention.
Fig. 16 is a schematic diagram illustrating a method for calculating C/N in the diversity receiver according to the fourth embodiment.
Fig. 17 is a block diagram illustrating the structure of a diversity receiver (2) according to the fourth embodiment.
Fig. 18 is a block diagram illustrating the structure of a diversity receiver (3) according to the fourth embodiment.
Fig. 19 is a block diagram illustrating the structure of a diversity receiver (4) according to the fourth embodiment.
Fig. 20 is a block diagram illustrating the structure of a diversity receiver according to a fifth embodiment of the present invention.
Fig. 21 is a block diagram illustrating the structure of a diversity receiver according to a sixth embodiment of the present invention.
Fig. 22 is a block diagram illustrating the structure of a diversity receiver according to a seventh embodiment of the present invention.
Fig. 23 is a block diagram illustrating the structure of a diversity receiver according to an eighth embodiment of the present invention.
Fig. 24A is a structural diagram of a first equalizer used for the diversity receiver according to the eighth embodiment.
Fig. 24B is a structural diagram of a second equalizer used for the diversity receiver according to the eighth embodiment.
Fig. 25 is a schematic diagram illustrating the operational principle of a reliability calculator.
Fig. 26 is a schematic diagram of an average power calculator used in the diversity receivers according to the seventh and eighth embodiments.
Fig. 27 is a block diagram illustrating the function of a carrier selecting/combining section used in the diversity receiver according to the eighth embodiment.
Fig. 28A is an explanatory view illustrating the content of a first table in the carrier selecting/combining section according to the eighth embodiment.
Fig. 28B is an explanatory view illustrating the content of a second table in the carrier selecting/combining section according to the eighth embodiment.
Fig. 29 is a block diagram illustrating the structure of a diversity receiver according to a ninth embodiment of the present invention.
Fig. 30 is a block diagram illustrating the structure of a diversity receiver according to a tenth embodiment of the present invention.
Fig. 31 is a schematic diagram illustrating the function of a reliability value calculator according to the tenth embodiment.

### DESCRIPTION OF THE PREFERRED EMBODIMENTS

### (First Embodiment)

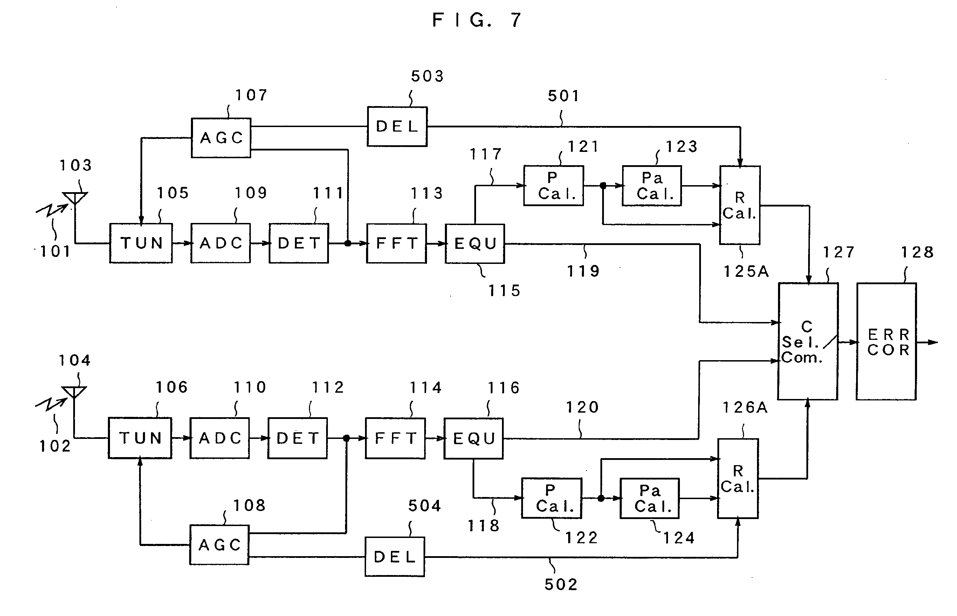

Fig. 7 illustrates the structure of an OFDM diversity receiver according to a first embodiment of the present invention. In Fig. 7, the same blocks as those of Fig. 1 are denoted by the same reference numerals.

OFDM signals 101, 102 reach antennas 103, 104, respectively. Tuners 105, 106 tune OFDM signals in a specified frequency band. Automatic gain controls (AGC) 107, 108 control gains of the tuners 105, 106 on the basis of outputs from orthogonal detectors (DET) 111, 112 to control output amplitudes in a certain range. The AGC 107, 108 increase the gains of the tuners in a case of small received power and decrease the gains of the tuners in a case of large received power.

Analog-digital converters (ADC) 109, 110 convert analog signals respectively outputted from the tuners 105, 106 into digital signals. The orthogonal detectors (DET) 111, 112 perform orthogonal demodulation upon the outputs from the ADC 109, 110 to convert the results into complex signals.

Fourier transformers (FFT) 113, 114 convert OFDM signals received via the antennas 103, 104 from time domain signals into frequency domain signals. A carrier subjected to FFT includes a data carrier which includes ordinary data and an SP signal inserted for every fixed interval.

Equalizers (EQU) 115, 116 estimate channel characteristics of the respective branches by using an SP signal. Power calculators (P cal.) 121, 122 calculate the power of channel characteristics for each carrier by using the channel characteristics respectively outputted from the equalizers 115, 116. Average power calculators (Pa cal.) 123, 124 calculate an accumulative average on the basis of the calculated channel characteristic power to determine an average power.

Reliability calculators (R cal.) 125A, 126A calculate reliability values for carriers by using pilot signals outputted from the equalizers 115, 116 and AGC values respectively outputted via delay sections (DEL) 503, 504 from the AGC 107, 108. A carrier selecting/combining section (C sel./com.)127 selects a carrier with higher reliability value among inputted carriers for the branches 1 and 2 on the basis of these reliability values or performs weighting combining in accordance with the reliability values. An error corrector (ERR COR) 128 performs error correction upon carriers subjected to such processings. The equalizers 115, 116 are the same as those of Fig. 2. Hereinafter, the larger an AGC value which is an output from the AGC 107, 108 becomes, the larger a received power becomes.

The operation of the diversity receiver with the above-described structure according to this embodiment will be described. In accordance with this embodiment, in order to solve the above-described problems, the reliability calculators (R cal.) 125A, 126A correct reliability values on the basis of outputs from the AGC 107, 108.

An outputted signal 501 from a delay section 503 is a delayed AGC value of the branch 1. An outputted signal 502 from a delay section 504 is a delayed AGC value of the branch 2. The delay sections 503, 504 correct a delay time required for signal processings from AGC control to reliability calculation. The reliability calculators 125A, 126A correct reliability values by using delayed AGC values.

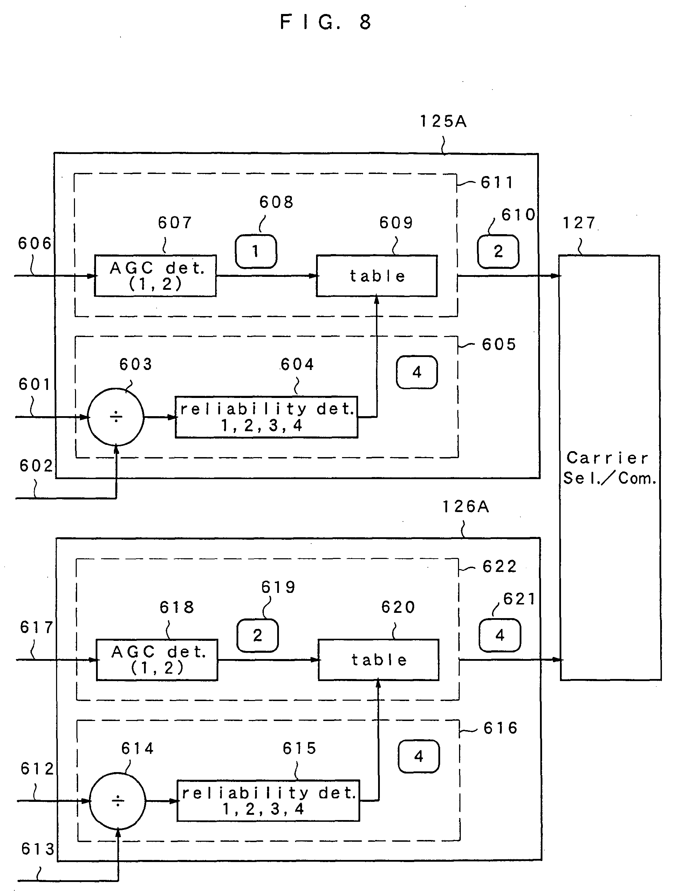

Fig. 8 illustrates an example of a reliability value correction processing using an AGC output. The reliability calculator 125A has a divider 603, a primary reliability value determination section 604, an AGC value determination section 607 and a correction table 609. Further, the reliability calculator 125A calculates a reliability value for each carrier in the branch 1 and outputs the result to the carrier selecting/combining section 127. The divider 603 and the primary reliability value determination section 604 are called as a reliability value calculation section 605. The AGC value determination section 607 and the correction table 609 are called as a reliability value correction section 611.

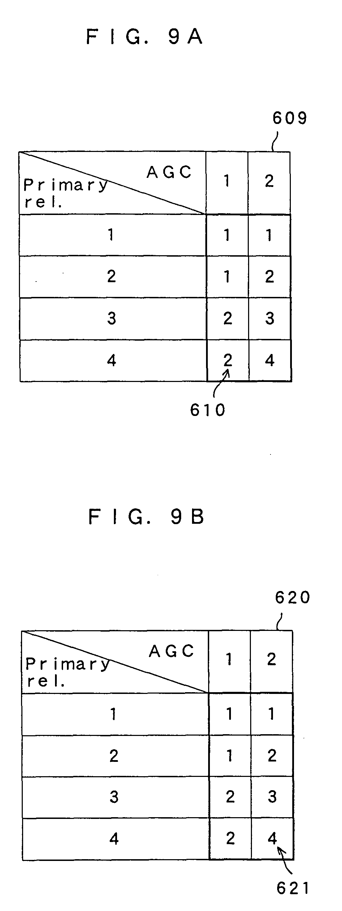

The reliability calculator 126A has a divider 614, a primary reliability value determination section 615, an AGC value determination section 618 and a correction table 620. Further, the reliability calculator 126A calculates a reliability value for each carrier in the branch 2 and outputs the result to the carrier selecting/combining section 127. The divider 614 and the primary reliability value determination section 615 are called as a reliability value calculation section 616. The AGC value determination section 618 and the correction table 620 are called as a reliability value correction section 622. Fig. 9A illustrates the content of the correction table 609. Fig. 9B illustrates the content of the correction table 620.

Description will be given of assuming that a received power is small in the branch 1 and large in the branch 2. A channel characteristic power value 601 for each carrier and an average power 602 of the channel characteristic are inputted to the reliability calculator 125A. The divider 603 divides the channel characteristic power value 601 for each carrier by the average power 602 and outputs the resultant divided value to the primary reliability value determination section 604. The primary reliability value determination section 604 has 1 to 4, i.e., four stages of reliability values and calculates the reliability value of a certain carrier as "4" in this example.

An AGC value 606 is inputted to the reliability calculator 125A. The AGC value determination section 607 determines stepwise the quality of a received power. The state of low AGC value is determined as "1" and the state of high AGC value is determined as "2". In this way, the AGC value determination section 607 determines in two steps and determines the inputted AGC value 606 to have "1" of determined value 608. Referring to the correction table 609 illustrated in Fig. 9A, values on the top column are the results of AGC value determination in the AGC value determination section 607. Values on the left row are the results of primary reliability determination in the primary reliability value determination section 604. The results of the primary reliability determination are corrected. In accordance with this example, the result of the primary reliability determination is "4" and the result of the AGC value determination is "1" in the correction table 609. Thus, as indicated by a reference numeral 610, the reliability value is corrected to "2" and this value is used as a corrected reliability value. Because the AGC value is low and the state of reception is inferior, correction is performed so as to decrease the reliability value. The corrected reliability value is outputted to the carrier selecting/combining section 127.

The same processings are performed in another branch. As shown by the reliability calculator 126A illustrated in Fig. 8, a power received in the branch 2 is excellent and thus the AGC value determination section 618 determines as "2". The result of the primary reliability determination is "4" as in the branch 1 and the result of the AGC determination is "2". Thus, the reliability value correction section 622 performs correction in accordance with the correction table 620 illustrated in Fig. 9B and outputs "4" as the reliability value, which is indicated by a reference numeral 621. This corrected reliability value is applied to the carrier selecting/combining section 127.

The reliability value is once calculated as "4" in both of the branches as the result of increasing a power by the AGC. Nevertheless, by correcting the AGC value, the reliability value is converted into a reliability value which reflects a reception state. Correction tables which are different from the above-described correction tables may be used. Alternatively, there may be considered a method that a comparison with a predetermined reference value is made and the reliability value of carrier determined so as to have significantly small received power is set to zero and then deleted. The same effects can be obtained by this method. By such correction, a reliability value which reflects an actual reception state can be calculated and effects of diversity can be improved.

The same effects can be obtained by, in addition to the correction using the above-described correction tables, correction of dividing/multiplexing the result of the primary reliability determination by an AGC value. Further, a reliability value which reflects a reception state can be calculated by the AGC value at the time of calculating reliability by the average power 602 and the channel characteristic power 601 for each carrier, instead of correcting an already calculated reliability value. The same effects can be also obtained in this case.

As described above, in accordance with this first embodiment, by correcting a reliability value on the basis of an AGC output, a reliability value which reflects an actually received power can be calculated. Then, selecting/combining for each carrier is performed by using the corresponding corrected reliability value. In this way, diversity for each carrier can be performed while eliminating influences of carrier with inferior reception state.

### (Second Embodiment)

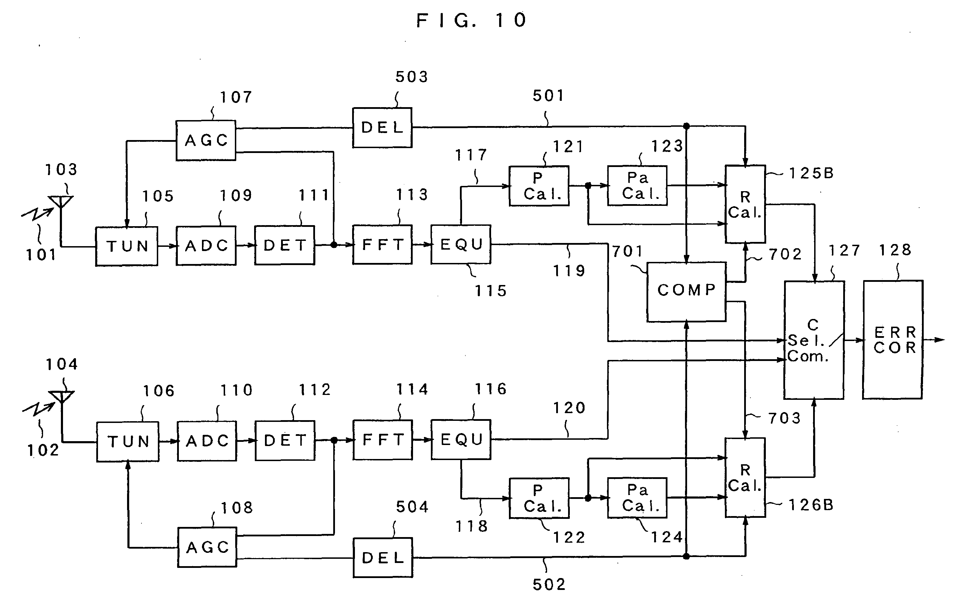

Next, an OFDM diversity receiver according to a second embodiment of the present invention will be described. Fig. 10 illustrates the structure of the OFDM diversity receiver of the second embodiment. Blocks having the same functions as those of the first embodiment are indicated by the same reference numerals as in Fig. 1.

The ODFM diversity receiver of this embodiment compares AGC values of the respective branches and corrects reliability values of the branches. Deterioration of characteristics in diversity may occur as well as when a received power is significantly decreased in one branch, when the relative difference of received power between two branches is significantly large. In the latter case, a degree of contribution of carrier in a branch with relatively lower reception level should be decreased or eliminated.

In accordance with this embodiment, in order to handle the case of signif icantly large difference of received power between the branches, a comparator (COMP) 701 is provided. The comparator 701 applies the result of comparison to the reliability calculator 125B of the branch 1 and the reliability calculator 126B of the branch 2. The comparator 701 illustrated in Fig. 10 compares AGC values of the two branches to calculate a differential value between AGC values. Then, the comparator 701 compares the differential value of the AGC value between the branches to a predetermined threshold. As a result of comparison, if the differential value is equal to or larger than the threshold, the reliability calculators (R cal.) 125B, 126B correct a reliability value. On the other hand, if the differential value is smaller than the threshold, the calculators do not correct the reliability value.

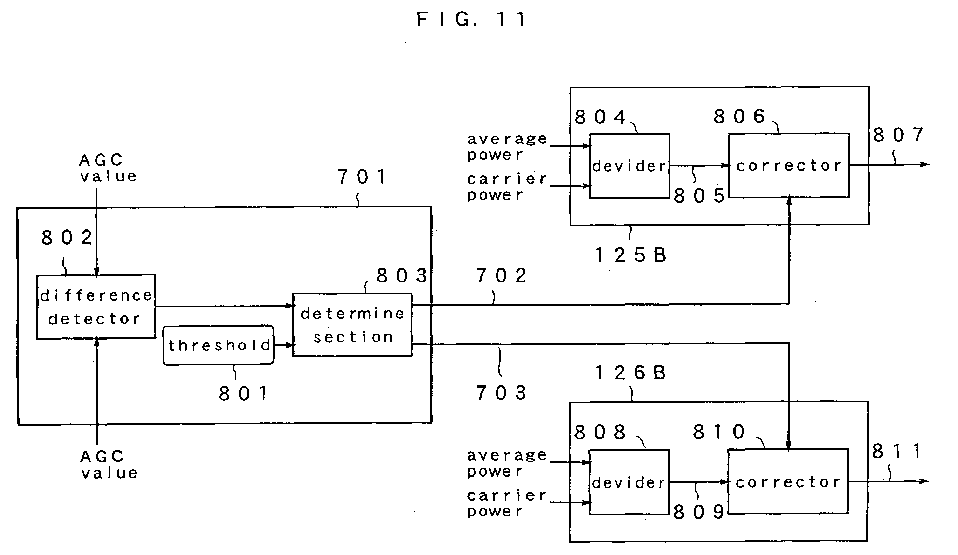

Fig. 11 illustrates a functional block diagram about correction of a reliability value in the comparator 701 and the reliability calculators 125B, 126B. The comparator 701 has a difference detector 802 and a determination section 803. The reliability calculator 125B has a divider 804 as a reliability value calculation section and a corrector 806 as a reliability value correction section. Similarly, the reliability calculator 126B has a divider 808 as the reliability value calculation section and a corrector 810 as the reliability value correction section.

An AGC value is inputted from the branches to the comparator 701. The difference detector 802 calculates a differential value between the AGC values of the branches. The determination section 803 compares the differential value to a threshold 801. If the differential value between the AGC values of the branches is less than the predetermined threshold 801, the determination section 803 outputs information 702, 703 that a reliability value needs not to be corrected. If the differential value is equal to or larger than the threshold 801, the determination section 803 outputs information that correction must be performed, the differential value and information 702, 703 about the relative magnitude of AGC value between the branches to the reliability calculators 125B, 126B, respectively. The reliability calculators 125B, 126B correct the reliability value by the transmitted information. The correctors 806, 810 decrease the reliability value of the branch with relatively smaller AGC value depending on the amount of difference between the AGC values and does not correct the reliability value of the branch with relatively higher AGC value. In this way, the difference between the AGC values exerts an influence upon the reliability value.

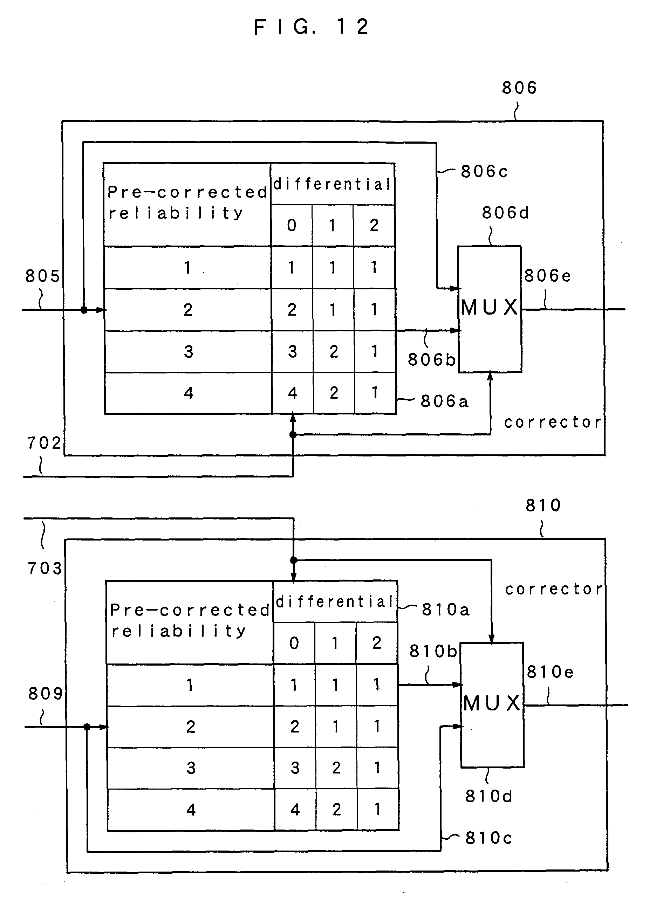

Fig. 12 illustrates functional block diagrams of the correctors 806, 810. A pre-corrected reliability value 805 calculated in the divider 804 illustrated in Fig. 11, the differential value between the AGC values supplied from the comparator 701 and the information 702 about the relative magnitude of AGC value between the branches are inputted to the corrector 806. Similarly, a pre-corrected reliability value 809 calculated in the divider 808 illustrated in Fig. 11, the differential value between the AGC values applied from the comparator 701 and the information 703 about the relative magnitude of AGC value between the branches are inputted to the corrector 810. This differential value between the AGC values is used in correction tables 806a, 810a within the correctors. The information about the magnitude of AGC value between the branches is used in multiplexers (MUX) 806d, 810d within the correctors.

The correction tables 806a, 810a are used to correct an already calculated reliability value depending on the amount of difference between the AGC values. As illustrated in the figure, in accordance with the correction tables, the differential value between the AGC values is placed on the top column and the pre-corrected reliability value is placed on the left row. The reliability value is corrected by the differential value between the AGC values applied from the comparator 701. The differential value is determined stepwise as "0", "1" or "2" in accordance with its magnitude. When the differential value is "2", the reliability value is corrected to the minimum value, i.e., "1" even if the pre-corrected reliability value is any of "1", "2", "3" and "4". These tables may be changed to tables containing other values.

The MUX 806d selects any of a reliability value 806b corrected by the correction table 806a and the pre-corrected reliability value 806c. The MUX 810d selects any of a reliability value 810b corrected by the correction table 810a and the pre-corrected reliability value 810c.

The correctors 806, 810 select, in accordance with the information 702, 703 about the magnitude of the AGC value between the branches, the corrected reliability values 806b, 810b for the branch with relatively small AGC value and the pre-corrected reliability values 806c, 810c for the branch with relatively large AGC value. The selected reliability values 806e, 810e are outputted to the carrier selecting/combining section 127 illustrated in Fig. 10.

Because of the above-described structure, by correcting the branch with relatively smaller AGC value in accordance with the amount of difference, a reliability value which reflects an actual reception state can be calculated and diversity can be performed for each of carriers. If a differential value is significantly large, correction may be performed by a method in which a reliability value for the branch with relatively smaller AGC value is decreased to zero. Thus, influences of carrier for a branch in a significantly inferior reception state can be eliminated in carrier diversity.

The same effects can be obtained by, in addition to correction using the correction tables, correction of dividing or multiplexing the result of primary reliability determination by an AGC value. Further, the same effects can be obtained by calculating a reliability value which reflects the state of reception by using the AGC value at the time of calculating the reliability value by the average power 602 and the channel characteristic power 601 for each carrier, instead of correcting an already calculated reliability value.

As described above, in accordance with the second embodiment, even if the relative difference of a received power between a plurality of branches becomes large, by correcting a reliability value for the branch with relatively low received power, a reliability value which reflects an actual reception state can be calculated. Then, by performing selecting/combining for each carrier by using the corresponding corrected reliability value, diversity can be performed for each carrier while eliminating influences of carrier for the branch with relatively inferior reception state.

### (Third Embodiment)

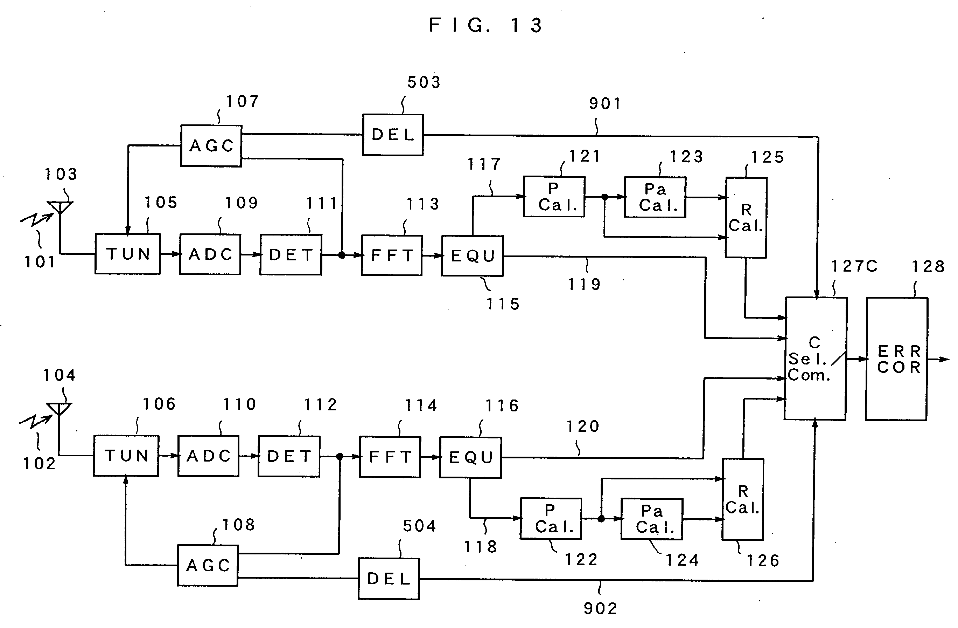

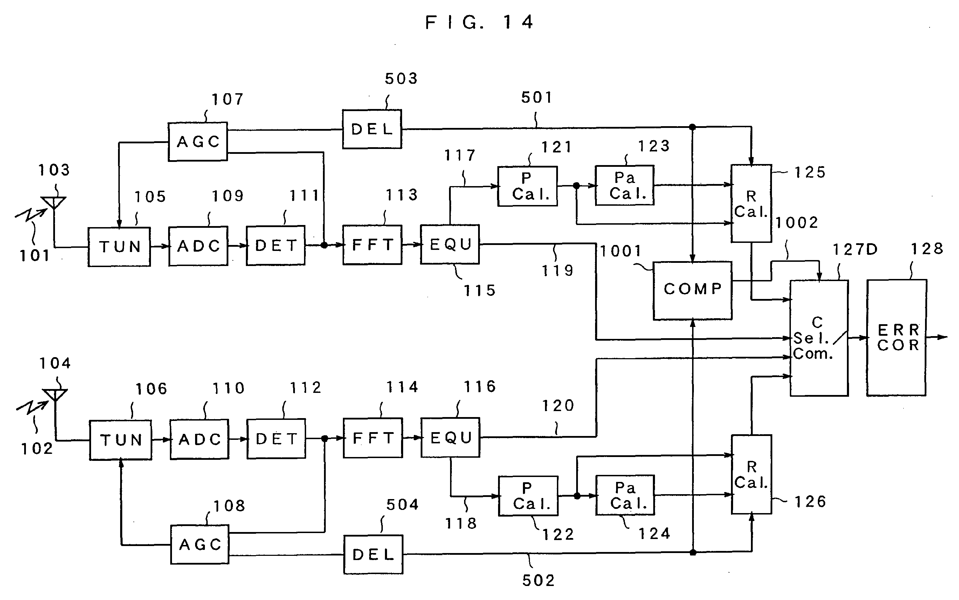

An OFDM diversity receiver according to a third embodiment of the present invention will be described. Fig. 13 illustrates the structure of an OFDM diversity receiver according to a third embodiment (1) of the present invention. Fig. 14 illustrates the structure of an OFDM diversity receiver according to a third embodiment (2) of the present invention. The OFDM diversity receiver of this embodiment does not correct a reliability value by using an AGC value. Instead, the OFDM diversity receiver uses the AGC value at the time of carrier selecting/combining.

The OFDM diversity having the structure illustrated in Fig. 13 will be firstly described. The same portions as those of the first and second embodiments are indicated by the same reference numerals and descriptions thereof will be omitted. A signal 901 is an AGC value which is inputted from the AGC 107 via the delay section 503 to the carrier selecting/combining section 127C. Similarly, a signal 902 is an AGC value which is inputted from the AGC 108 via the delay section 504 to the carrier selecting/combining section 127C.

In the carrier selecting/combining section 127C, carrier selecting and combining is performed in accordance with a reliability value. Nevertheless, a carrier for a branch which is determined to have significantly low received power on the basis of an inputted AGC value is not used regardless of its reliability value. When there provided three or more branches and the received power for one branch is significantly decreased, the carrier selecting/combining section 127C may discard only a carrier of the corresponding branch and perform diversity with carriers of other branches. In this case, even further superior effects can be obtained.

The OFDM diversity receiver illustrated in Fig. 14 compares AGC values for two branches and, if the difference between the AGC values is significantly large, does not use the carrier of the branch with lower received power for diversity. The comparator (COMP) 1001 compares AGC values of both branches. As the comparator 701 illustrated in Fig. 11, the comparator 1001 determines whether or not the differential value between the AGC values of the branches exceeds a predetermined threshold. If the differential value is equal to or larger than the threshold, the comparator 1001 notifies such state to the carrier selecting/combining section 127D. When the carrier selecting/combining section 127D receives such notice, it does not use the carrier for the branch with relatively low received power at the time of carrier selecting/combining.

A method for excluding a carrier in the carrier selecting/combining section 127D will be described hereinafter. For example, in an ordinary processing, an OFDM diversity receiver formed of two branches performs weighting combining upon corresponding carriers of the branches by using the reliability values of the branches 1 and 2. If it is determined that the received power of the branch 1 is lower than a predetermined reference value or if a differential value is equal to or larger than a predetermined value, however, two carriers are not combined and only the carrier of the branch 2 is outputted to the error corrector 128. Because of such processing, a degree of contribution of carrier in a branch with low received power can be eliminated.

At the time of selection for each carrier, a carrier in the branch with low received power may be excluded from carrier candidates to be selected and a carrier in another branch may be outputted to the error corrector. Alternatively, in the case of an OFDM diversity receiver formed of three or more branches, if the received power of a branch is smaller than a predetermined value, combining is performed by using carriers other than the carrier of the corresponding branch. As a result, more superior effects can be obtained. Because of such processing, adverse effects in carrier diversity caused by the carrier of the branch with relatively and significantly low received power can be eliminated.

As described above, in accordance with the third embodiment, a carrier of a branch with significantly low received power or a branch with relatively and significantly low received power can be removed and then selecting/combining for each carrier can be performed. Consequently, diversity for each carrier can be performed while eliminating influences of carrier with inferior received power.

### (Fourth Embodiment)

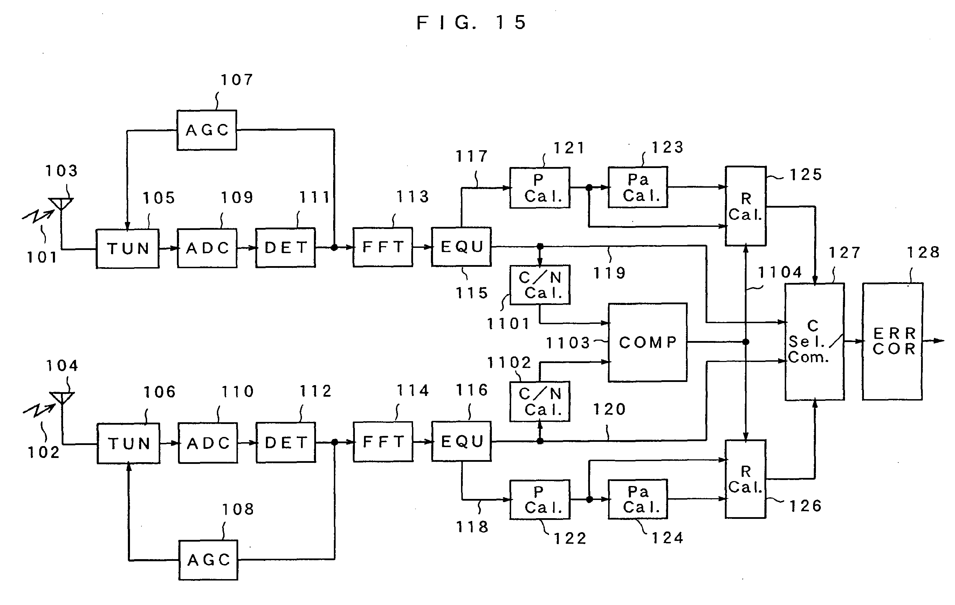

An OFDM diversity receiver according to a fourth embodiment of the present invention will be described. Fig. 15 illustrates the structure of an OFDM diversity receiver (1) according to this embodiment.

The OFDM diversity receiver of this embodiment corrects a reliability value and eliminates a branch with inferior reception state by using a C/N value. Although the reliability value is corrected by determining variations in the state of reception by an AGC value in the above-described first to third embodiments, the OFDM diversity receiver of the fourth embodiment determines the reception state by the C/N value.

C/N calculators 1101, 1102 calculate a C/N value by calculating an average power of carrier which is subjected to FFT and then equalized by using an SP signal. With respect to calculation for an average value, an average for one OFDM symbol may be considered. Under this case, a reliability value can be corrected in real time with respect to variations in reception. An average for a few OFDM symbols may be used as the average value.

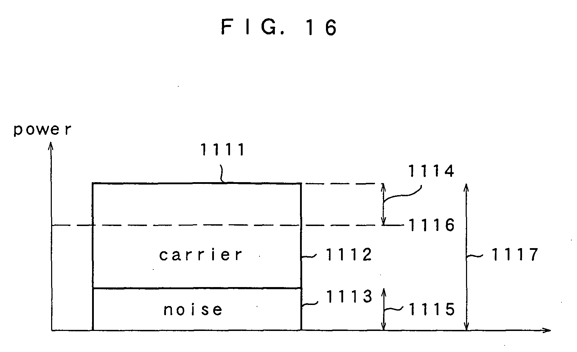

Fig. 16 illustrates the concept for calculation of a C/N value. A power 1111 indicates the average power of a received signal. The received signal includes a carrier component 1112 and a noise component 1113. The average power of the received signal is an added value of the carrier component and the noise component and serves as a power indicated by the arrow 1117. A power 1116 for only the carrier is already known as described above and a difference 1114 between the calculated average power 1117 and the known carrier power 1116 is equal to the power of an original noise component 1115. By calculating a ratio of the average power 1117 and the difference 1114, a C/N value can be determined. The C/N value is also calculated by variations in a scattered pilot signal.

In the OFDM diversity receiver illustrated in Fig. 15, the comparator 1103 compares the differential value between C/N values in branches to a predetermined threshold. If the differential value exceeds the predetermined threshold as the result of comparison, the comparator 1103 transmits information 1104 containing information indicating that correction is required, the differential value and a signal for designating a branch with inferior C/N value to the reliability calculators 125, 126.

In order to correct the difference in delay between the time when a C/N is calculated and the time when a reliability value is corrected, an appropriate delay device is inserted to adjust the delay. Even if the delay device is not provided, the same effects can be obtained in a case of moderate reception variations.

If the reliability value needs to be corrected, the reliability calculators 125, 126 perform correction so as to decrease the reliability value of a branch with relatively inferior C/N value by a differential value. Under such case, correction is performed depending on the differential value between C/N values by using a correction table which is the same as in the corrector illustrated in Fig. 12. The reliability calculators 125, 126 perform correction by using a correction table consisted of a matrix of the differential amount between C/N values and a pre-corrected reliability value. When the differential value is significantly large, the reliability calculators 125, 126 may set the reliability value to zero. Thus, influences of carrier with significantly inferior C/N value can be eliminated.

The same effects can be obtained by correcting a reliability value by dividing or multiplexing by the differential value between C/N values. A reliability value which reflects the state of reception may be calculated by using the differential value between C/N values at the time of calculating the reliability from an average power and a channel characteristic power for each carrier, instead correcting an already calculated reliability value. The same effects can be obtained by this method.

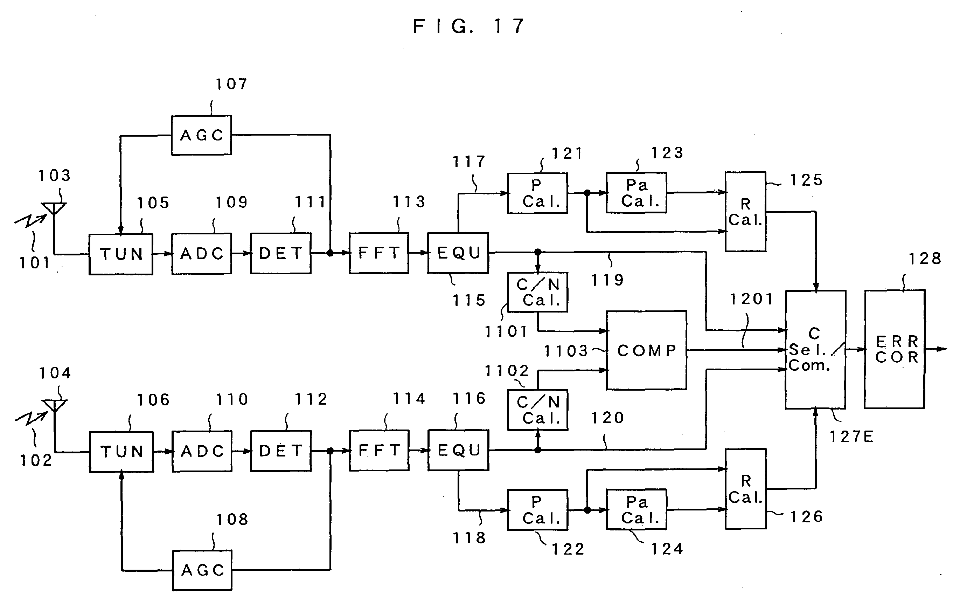

An OFDM diversity receiver (2) illustrated in Fig. 17, as in the third embodiment, does not use a carrier of a branch with relatively inferior C/N value in diversity if the differential value between C/N values exceeds a predetermined threshold. A signal 1201 outputted from the comparator 1103 is information for transmitting the result of comparison of the C/N values in the branches to the carrier selecting/combining section 127E. When the carrier selecting/combining section 127E receives a notice that the differential value between C/N values is equal to or larger than a threshold, it performs a processing that a carrier in a branch with relatively inferior C/N value is not used. In accordance with the processing for excluding a carrier, as described in the third embodiment, a carrier in the branch with a C/N value which is inferior to a predetermined reference is not used for weighting and a carrier in another branch is outputted to the error corrector 128. Alternatively, at the time of carrier selection, the carrier of the branch with inferior C/N value may be exclude from candidates to be selected and the carrier of the other branch may be outputted to the error corrector 128.

When there provided three or more branches, diversity may be performed by using carriers other than a carrier of a branch with the worst C/N value. More superior effects can be obtained in this case.

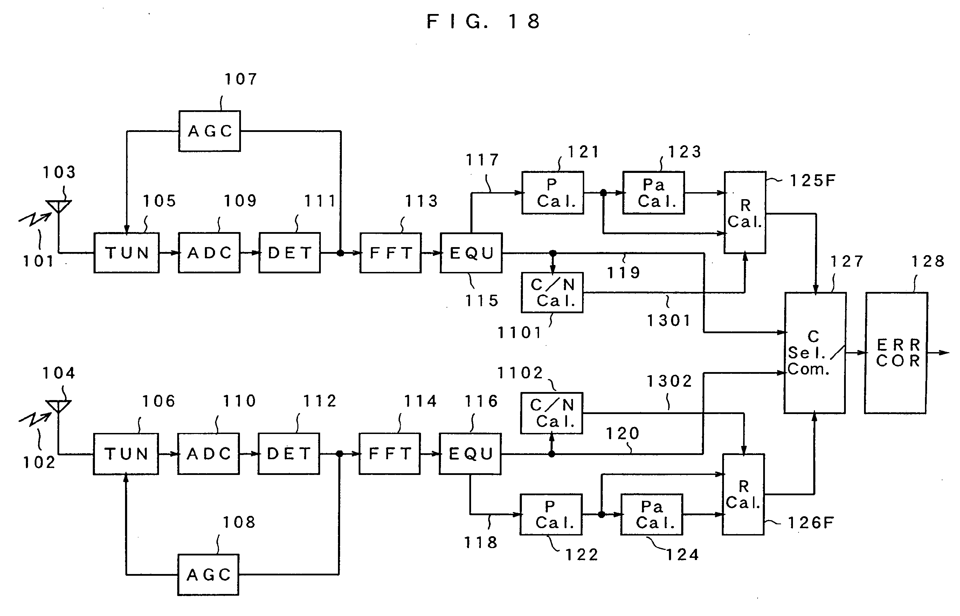

An OFDM diversity receiver (3) illustrated in Fig. 18 corrects a reliability value for each of branches using the results of C/N values calculated in the branches. As in the first embodiment, in order to reflect an actual reception state upon a reliability value to be calculated, the reliability calculators (R calculators) 125F, 126F correct the reliability value by using a C/N value serving as an index for reception state.

The correction in the reliability calculators 125F, 126F is performed depending on the magnitude of a C/N value by using a correction table which is the same as the correction table illustrated in Fig. 9 and described in the first embodiment. Namely, a certain value is allocated to the C/N value for every predetermined level, and correction is performed by using a correction table consisted of a matrix of the resultant value and a pre-corrected reliability value.

Alternatively, the reliability value of the carrier with significantly worse C/N value may be decreased to zero. As a result, adverse effects of the carrier with the worse C/N value can be eliminated. Moreover, the C/N value may be indicated by an arbitrary step value. Correction may be performed by dividing or multiplexing the reliability value by this step value. The same effects can be obtained by this method.

The reliability value which reflects an actual reception state can be calculated by using the C/N value at the time of calculating the reliability value from an average power and a channel characteristic power for each carrier, instead of correcting an already calculated reliability value. The same effects can be obtained by this methods.

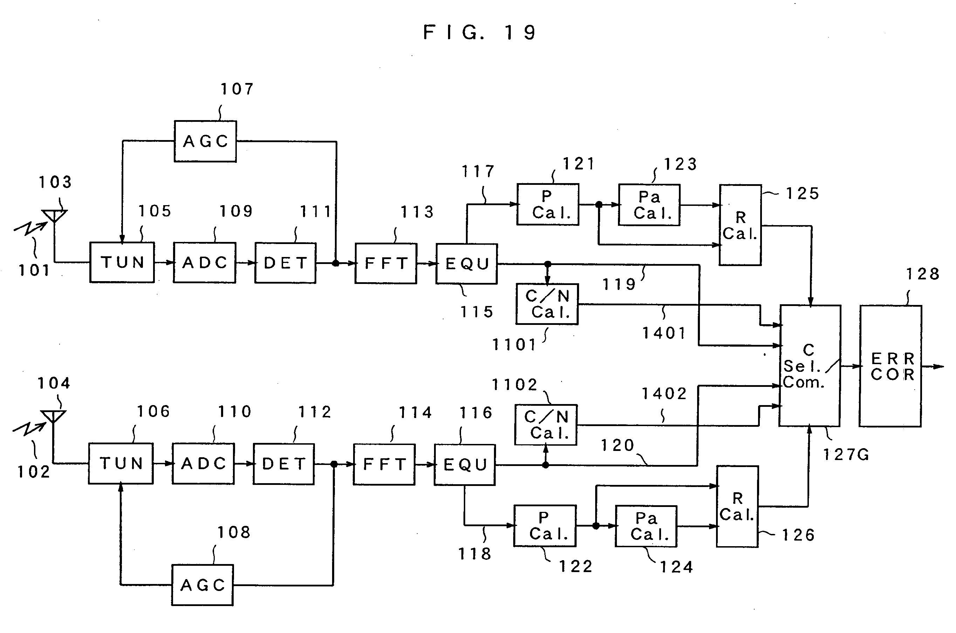

An OFDM diversity receiver (4) illustrated in Fig. 19 uses C/N values calculated in branches not at the time of correcting a reliability value but at the time of carrier diversity. The carrier selecting/combining section 127G excludes a carrier of a branch with a C/N value inferior to a predetermined reference by the above-described processing and then performs diversity.

As described above, in accordance with the fourth embodiment, by correcting a reliability value depending on the state of C/N value, the reliability value which reflects an actual reception state can be calculated. Then, by performing selecting/combining for each carrier by using the resultant corrected reliability value or performing selecting/combining for each carrier while excluding a carrier of branch with inferior C/N value, diversity can be performed while eliminating influences of the carrier with inferior C/N.

### (Fifth Embodiment)

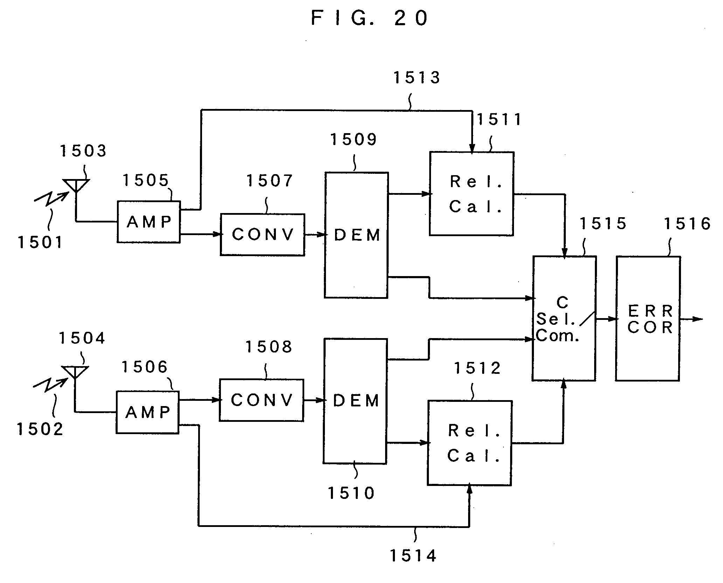

Next, an OFDM diversity receiver according to a fifth embodiment of the present invention will be described. Fig. 20 illustrates the structure of the OFDM diversity receiver according to the fifth embodiment. Signals 1501, 1502 are RF signals respectively received by antennas 1503, 1504 and subjected to frequency division multiplexing.

Amplifiers (AMP) 1505, 1506 amplify a received signal. An amplified signal is inputted to converters 1507, 1508. The converters (CONV) 1507, 1508 demodulate the inputted signal to a complex signal by orthogonal detection and convert the resultant complex signal from a time domain signal into a frequency domain signal by using an orthogonal function. In this way, the converters 1507, 1508 extract a plurality of carriers multiplexed in a frequency domain.

Demodulators (DEM) 1509, 1510 perform equalization upon the carriers respectively extracted by the converters 1507, 1508 by correcting, if desired, their phases and amplitudes. The reliability calculators 1511, 1512 calculate a reliability value for each of the equalized carriers outputted from the demodulators 1509, 1510 with its power serving as the reference.

The amplifiers 1505, 1506 amplify the received signal. For this reason, when a reliability value is directly calculated from the power of carriers outputted from detectors within the converters 1507, 1508, this reliability value may not reflect an actually received power. Then, information 1513, 1514 about amplification degree of the amplifiers 1505, 1506 is applied to the reliability calculators 1511, 1512. The reliability calculators 1511, 1512 correct the reliability value by using the information 1513, 1514.

The reliability calculators 1511, 1512 corrects the reliability value by using the amplification degree included in the information 1513, 1514 and a correction table that an already calculated reliability value serves as a parameter. The correction table used is the same as that described in the first embodiment with reference to Figs. 8 and 9. The corrected reliability value is outputted to the carrier selecting/combining section 1515. The carrier selecting/combining section 1515 selects a carrier with larger reliability value or performs weighting combining for each carrier in accordance with the reliability value.

The output signal from the carrier selecting/combining section 1515 is inputted to the error corrector 1516, and the error corrector 1516 performs required error correction. An amplifier such as a tuner or LNA may be used in the amplifiers 1505, 1506. The converters 1507, 1508 extract a plurality of carriers existing on a frequency domian by a Fourier transform for performing conversion from time domain to frequency domain or transform utilizing a synthesizer. Further, the converters 1507, 1508 perform, if desired, frequency conversion to convert into an IF band or a baseband.

The reliability calculators 1511, 1512 not only process the outputs from the amplifiers 1505, 1506, but also calculate a C/N value for the received signal. Thus, the reliability value may be corrected by a correction table with this C/N value serving as a parameter.

### (Sixth Embodiment)

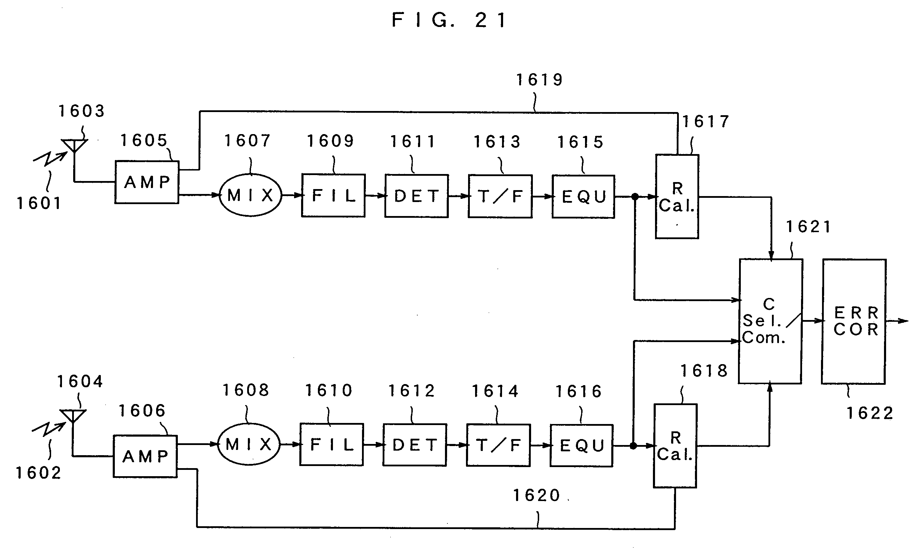

An OFDM diversity receiver according to a sixth embodiment of the present invention will be described. Fig. 21 illustrates the structure of the OFDM diversity receiver according to the sixth embodiment. Signals 1601, 1602 are frequency division multiplexing signals received by antennas 1603, 1604. Amplifiers 1605, 1606 amplify the signals received by the antennas 1603, 1604. An LNA which is a reduced noise amplifier is used for the amplifiers 1605, 1606.

Mixers (MIX) 1607, 1608 convert the frequency of the received signals from an RF band to an IF band. Filters (FIL) 1609, 1610 remove excess high frequency components from the outputted signal from the mixers 1607, 1608 in order to reduce noises. Detectors 1611, 1612 demodulate the received signal into a complex signal by orthogonal demodulation and convert its frequency into a baseband.

Time-frequency converters (T/F) 1613, 1614 convert the received signal from a time domain signal into a frequency domain signal to extract a plurality of carriers multiplexed in a frequency domain. For example, fast Fourier transform is used. Equalizers 1615, 1616 correct phases and amplitudes of the demodulated carriers.

The reliability calculators (R cal.) 1617, 1618 calculate a reliability value on the basis of the power of each of the carriers. At this time, a signal subjected to power amplification by the amplifiers 1605, 1606 is used. Thus, the power may not reflect an actual reception state. Consequently, the calculated reliability value may not reflect the actual reception state. Then, the reliability value calculators 1617, 1618 correct the reliability value by using output information 1619, 1620 from the amplifiers 1605, 1606.

This correction is performed by using a correction table with outputs from the amplifiers being parameters as described in the first embodiment with reference to Figs. 8 and 9. The calculated reliability value can reflect the actual reception state. The reliability values corrected by the reliability calculators 1617, 1618 are outputted to the carrier selecting/combining section 1621. The carrier selecting/combining section 1621 selects a carrier with larger reliability value or performs weighting combining for carriers in accordance with the reliability values. An outputted signal from the carrier selecting/combining section 1621 is inputted to an error corrector 1622. The error corrector 1622 performs required error correction.

As described above, in accordance with the fifth and sixth embodiments, in a receiver which receives, as well as an OFDM signal, a frequency division multiplexing signal (FDM signal), a reliability value reflecting the state of reception can be calculated and diversity for each carrier can be performed. Because of the above-described embodiments, effects of diversity can be improved.

### (Seventh Embodiment)

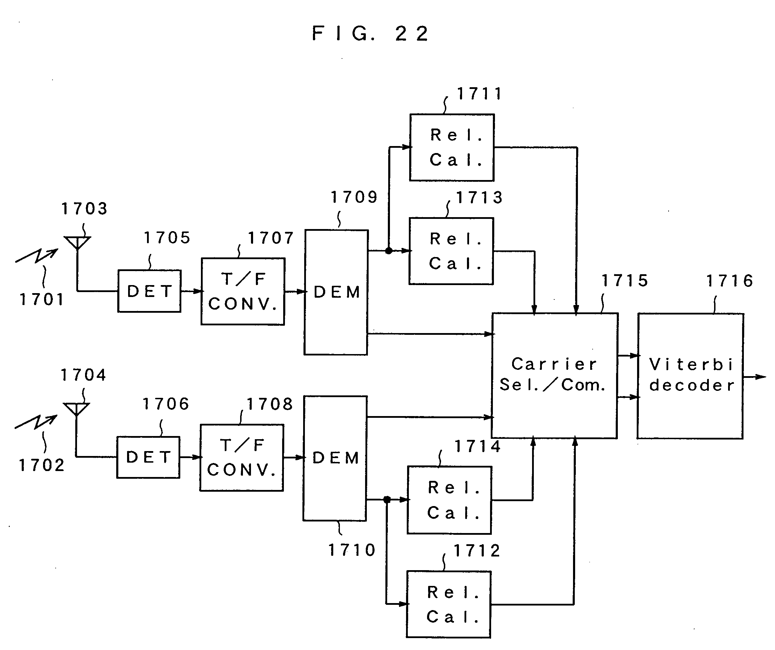

A diversity receiver according to a seventh embodiment of the present invention will be described with reference to the figures. The diversity receiver of the seventh embodiment includes a Viterbi decoder. Fig. 22 illustrates the structure of such diversity receiver. Arrival radio waves 1701, 1702 are received signals inputted to antennas 1703, 1074 for the diversity receiver and frequency division multiplexing signals. Detectors (DET) 1705, 1706 frequency-convert a received signal in an RF band into a signal in an IF band and convert the resultant signal into a complex digital signal by orthogonal detection. Time-frequency converters (T/F CONV) 1707, 1708 convert outputted signals from the detectors 1705, 1706 from signals in a time domain into signals in a frequency domain to output carriers. Demodulators 1709, 1710 correct phases and amplitudes of the carriers in a frequency direction.

Reliability calculators 1711, 1712 calculate a reliability value X used for weighting in Viterbi decoding. The reliability value X is calculated by comparing the power of each of carriers to a reference power for a few levels using arbitrary thresholds. The reliability value X used in Viterbi decoding is desirably calculated so as to have a certain degree of reliability even if an absolute power is low. For this reason, the reliability value X is calculated by setting the reference power so as to be varied in accordance with variations in the power for each carrier.

Reliability calculators 1713, 1714 calculate a reliability value Y used for diversity. The reliability value Y is calculated, as in the case of calculating the reliability value X, by comparing the power of each of carriers to a reference power for a few levels using arbitrary thresholds. As described in conventional examples, the reliability value Y used for diversity is desirably calculated so as to reflect an absolute power. Thus, while the power serving as the reference is maintained constant, a reliability value is calculated. In this way, the reliability value Y which reflects an absolute power can be calculated. The reliability Y is referred to as a first reliability value and the reliability value X is referred to as a second reliability value.

The carrier selecting/combining section 1715 performs selecting/weighting combining for carriers in accordance with the reliability value Y calculated by the reliability calculators 1713, 1714. A Viterbi decoder 1716 performs weighting for each of the carriers by using the reliability value X to perform maximum likelihood decoding.

As described above, in accordance with the seventh embodiment, a reliability value which is suitable for diversity and a reliability value which is suitable for Viterbi decoding can be calculated. As a result, effects of the diversity and the Viterbi decoding can be improved. Further, reductions in a circuit scale and a processing load can be realized.

### (Eighth Embodiment)

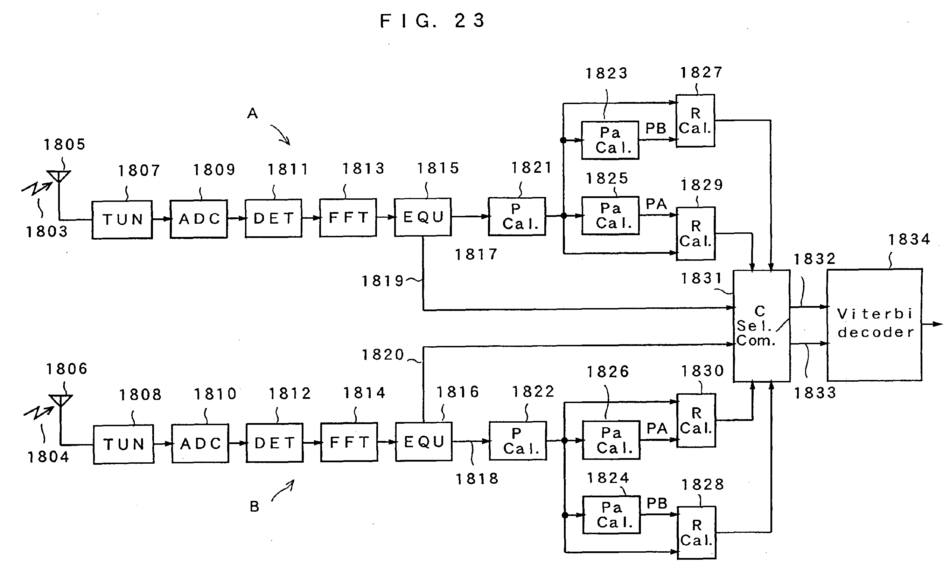

Next, a diversity receiver according to an eighth embodiment of the present invention will be described. Fig. 23 illustrates the structure of the diversity receiver of the eighth embodiment. This diversity receiver is formed of two series referred to as "branch A" and "branch B", respectively. In accordance with the diversity receiver, diversity is performed for each of carriers demodulated in the branches and then the carriers are inputted to a Viterbi decoder.

Arrival radio waves 1803, 1804 are OFDM signals reaching antennas 1805, 1806. Tuners 1807, 1808 perform tuning and down-convert a received signal in an RF band into a signal in an IF band. ADC 1809, 1810 convert an analog signal outputted from the tuners 1807, 1808 into a digital signal. Orthogonal detectors (DET) 1811, 1812 perform orthogonal detection upon outputs from the ADC 1809, 1810 to convert the results into complex digital signals. Fast Fourier transformers (FFT) 1813, 1814 convert the received OFDM signal from a carrier serving as a time domain signal into a carrier serving as a frequency domain signal.

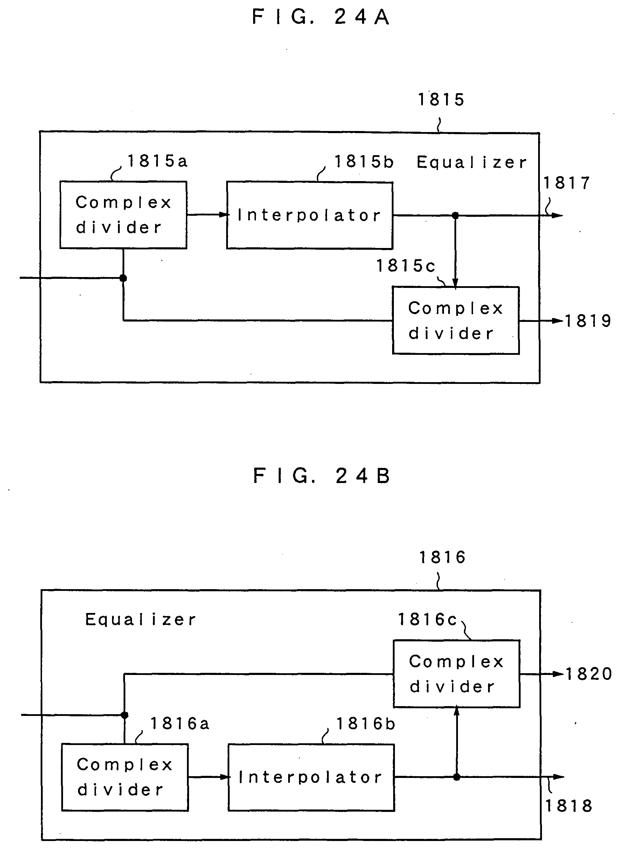

A data carrier and a carrier for scattered pilot signal (SP signal) inserted for every fixed interval exist in a mixed manner in the signal subjected to FFT. The amplitude and phase of the SP signal are known. Equalizers 1815, 1816 estimate channel characteristics of the carriers by using the SP signal. Figs. 24A and 24B respectively illustrate structural diagrams of the equalizers 1815, 1816. Complex dividers 1815a, 1816a complex-divide the received SP signal by the known SP signal to calculate the channel characteristic on the position of the SP signal. Interpolators 1815b, 1816b interpolate the channel characteristic on the position of the SP signal in a time and frequency directions in order to calculate channel characteristics for all carrier positions. The data carriers are equalized by complex-dividing the signal subjected to FFT by the channel characteristic on each of the carrier positions by using the complex-dividers 1815c, 1816c.

The equalizers 1815, 1816 output equalized carriers and calculated channel characteristics. The equalizer 1815 outputs a channel characteristic 1817 and a data carrier 1819 in the branch A. The equalizer 1816 outputs a channel characteristic 1818 and a data carrier 1820 in the branch B.

Power calculators (P cal.) 1821, 1822 calculate the power of a channel characteristic (channel characteristic power) for each carrier from the outputted channel characteristic. Average power calculators (Pa cal.) 1823, 1824 calculate an average power PB by outputs from the power calculators 1821, 1822. This average power (PB) serves as the reference at the time of calculating the reliability value X (second reliability value) used in Viterbi decoding. Reliability calculators (R cal.) 1827, 1828 calculate the reliability value X. This reliability value X is calculated for each of a few levels using certain thresholds with the average power PB being a reference.

Average power calculators (Pa cal.) 1825, 1826 calculate an average power PA. This average power PA serves as the reference at the time of calculating the reliability value Y (first reliability value) used for diversity. Reliability calculators (R cal.) 1829, 1830 calculate the reliability value Y. This reliability value Y is calculated for each of a few levels using certain thresholds with the average power PA being a reference. The reliability calculator 1829 is referred to as a first reliability calculator in the branch A. The reliability calculator 1830 is referred to as a first reliability calculator in the branch B. Further, the reliability calculator 1827 is referred to as a second reliability calculator in the branch A. The reliability calculator 1828 is referred to as a second reliability calculator in the branch B. The average power calculators 1823, 1825 are referred to as reference value calculators in the branch A. The average power calculators 1824, 1826 are referred to as reference value calculators in the branch B.

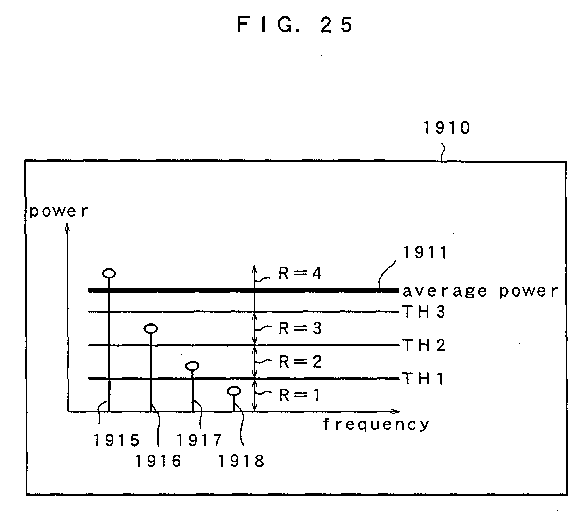

Fig. 25 illustrates a schematic diagram of reliability calculator 1910 provided within the reliability calculators 1827, 1828, 1829, 1830. A reference numeral 1911 indicates an average power serving as a reference. "3" to "1" are set as thresholds with the average power being a reference. Powers 1915, 1916, 1917, 1918 indicate powers of channel characteristics for four carriers. The higher a line indicating the power becomes, the larger its power becomes. The power 1915 is larger than the threshold 3 and thus its reliability value is calculated as the maximum value, i.e., 4. The power 1916 is larger than the threshold 2 and smaller than the threshold 3, and its reliability value is calculated as 3. Similarly, the power 1917 is larger than the threshold 1 and smaller than the threshold 2, and its reliability value is calculated as 2. The power 1918 is less than the threshold 1 and its reliability value is calculated as 1. With respect to the average power serving as the reference at the time of calculating a reliability value, the average power PB is desirably varied in accordance with variations in reception (short time average), and the average power PA is desirably maintained to a certain value regardless of variations in reception (long time average).

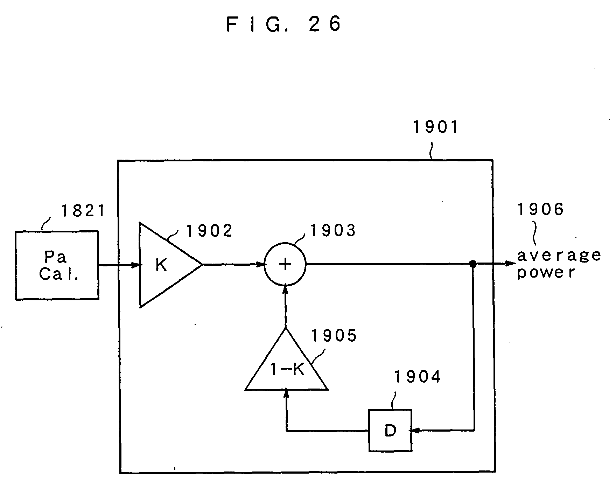

In accordance with the eighth embodiment, the average power and the reliability value are calculated for Viterbi and for diversity, respectively. Methods for calculating the average power that are suitable respectively for Viterbi and diversity are used. Fig. 26 illustrates a functional block diagram showing an example of the average power calculator. The average power calculator 1901 calculates an average power by using an infinite loop filter (referred to as IIR filter).

When the power of a channel characteristic (channel characteristic power) for each carrier is outputted from the power calculators 1821, 1822, a multiplier 1902 multiplies this output signal by a filter gain K. Then, a delay device 1904 delays an average power 1906. A multiplier 1905 multiplies this delayed signal by (1 - K). An adder 1903 adds the output from the multiplier 1902 to the output from the multiplier 1905 and outputs the result of addition as the average power 1906.

At the time of calculating the average power PB serving as the reference for calculating the reliability value X used in Viterbi decoding, the value of the filter gain K in the IIR filter illustrated in Fig. 26 is set to be large to improve the following ability of the IIR filter. On the other hand, at the time of calculating the average power PA serving as the reference for calculating the reliability value Y used for diversity, the value of the filter gain K in the IIR filter is set to be small to decrease the following ability of the IIR filter. As described above, the average power and the reliability value are calculated for Viterbi and for diversity, and an average power that is suitable for Viterbi and an average power that is suitable for diversity are respectively calculated.

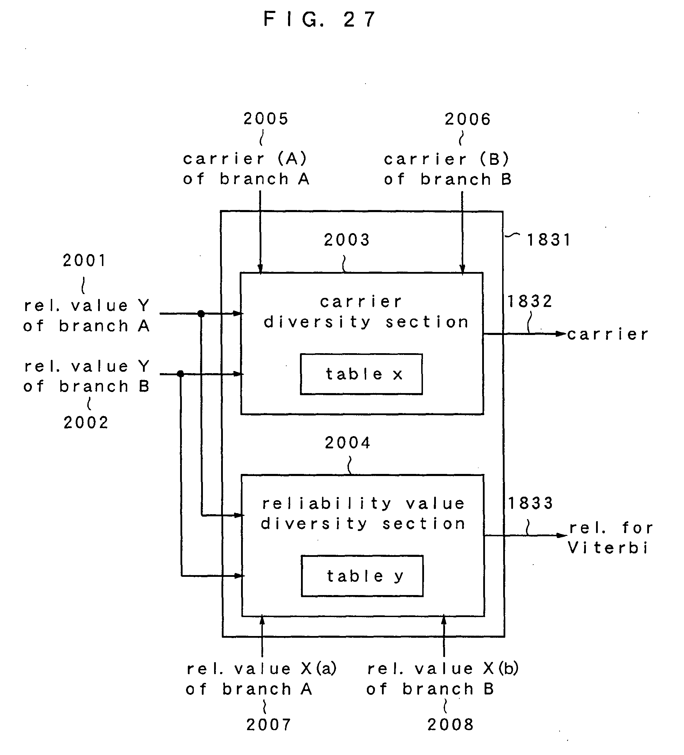

The carrier selecting/combining section 1831 illustrated in Fig. 23 performs selecting or weighting combining for carrier and the reliability value X. Fig. 27 illustrates the internal structure of the carrier selecting/combining section 1831 and the relationship of input/output signals. The carrier/selecting section 1831 is configured by a carrier diversity section 2003 and a reliability value diversity section 2004.

The carrier diversity section 2003 performs carrier selecting or weighting combining by using a first calculation table x in accordance with the reliability value Y for each branch. The reliability value diversity section 2004 performs selecting or weighting combining upon the reliability value X by using a second calculation table y in accordance with the reliability value Y for each branch to convert into a third reliability value I.

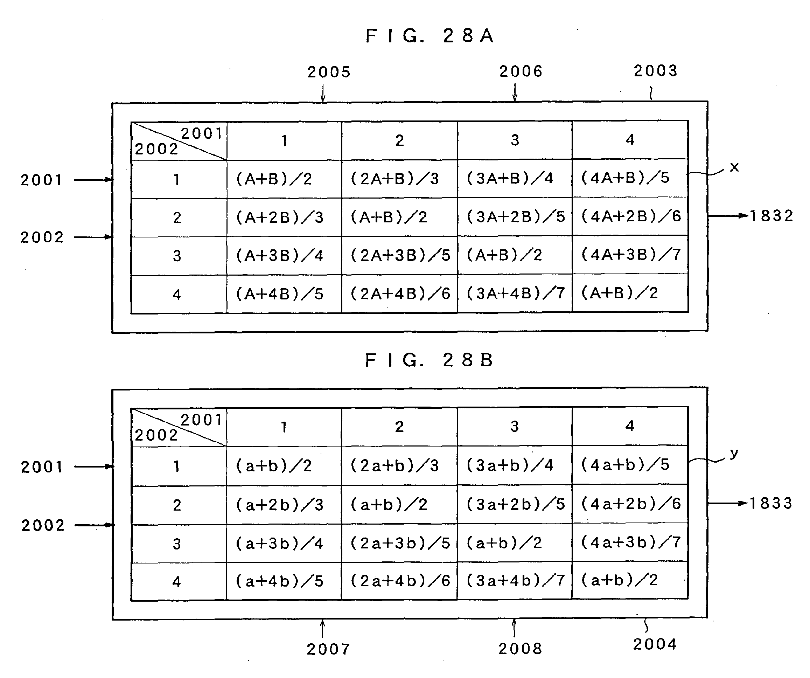

Figs. 28A and 28B illustrate schematic diagrams showing the contents of tables used for weighting combining. The first table x illustrated in Fig. 28A performs weighting combining upon a carrier. The second table y illustrated in Fig. 28B performs weighting combining upon the reliability value X for Viterbi. As illustrated in Fig. 27, a reliability value 2001 of the branch A, a reliability value 2002 of the branch B, a carrier 2005 of the branch A and a carrier 2006 of the branch B are inputted to the table x. As illustrated in Fig. 28A, values on the left row in the table x indicate the reliability value Y of the branch B, and values on the top column indicate the reliability value Y of the branch A. The reliability value Y has four values, i.e., 1 to 4.

A carrier is subjected to weighting combining in accordance with the reliability value Y. For example, when the reliability value Y of the branch A is "1" and the reliability value Y of the branch B is "3", weighting combing is performed upon the carrier with (A + 3B)/4. When the reliability value Y of the branch A is equal to that of the branch B, weighting combining is performed upon the carrier with (A + B)/2. In this way, the carrier diversity section 2003 outputs the resultant weighted combined carrier 1832.

A reliability value Y (2001) of the branch A, a reliability value Y (2002) of the branch B, a reliability value X(a) (2007) of the branch A and a reliability value X(b) (2008) of the branch B are inputted to the table y. As illustrated in Fig. 28B, values on the left row indicate the reliability value Y of the branch B and values on the top column indicate the reliability value Y of the branch A.

The reliability value for Viterbi is obtained by weighting combining the reliability value X as in the table x. As shown in the table y, for example, when the reliability value Y of the branch A is "1" and the reliability value Y of the branch B is "3", weighting combining is performed for the reliability value with (a + 3b)/4. When the reliability value Y of the branch A is the same as that of the branch B, weighting combining is performed for the reliability value with (a + b)/2. Then, the reliability value diversity section 2004 outputs the weighted combined reliability value 1833 for Viterbi. The Viterbi decoder 1834 illustrated in Fig. 23 weights the carrier 1832 with the reliability value 1833 for Viterbi to perform maximum likelihood decoding.

In accordance with this embodiment, as described with reference to Figs. 24A and 24B, an average power is calculated by an IIR filter. The average power may be calculated by using an adder and a divider and two types of averages, i.e., a short time average and a long time average may be provided at the time of calculating the average power. The same effects can be obtained by such method. With respect to the weighting combining described with reference to Fig. 27, the same effects can be obtained by using other tables. If the table x used for carrier selecting/combining is different from the table y used for selecting/combining of the reliability value X, the same effects can be obtained. Further, the same effects can be obtained by a method for selecting a carrier or reliability value X in a branch with larger reliability value Y.

### (Ninth Embodiment)

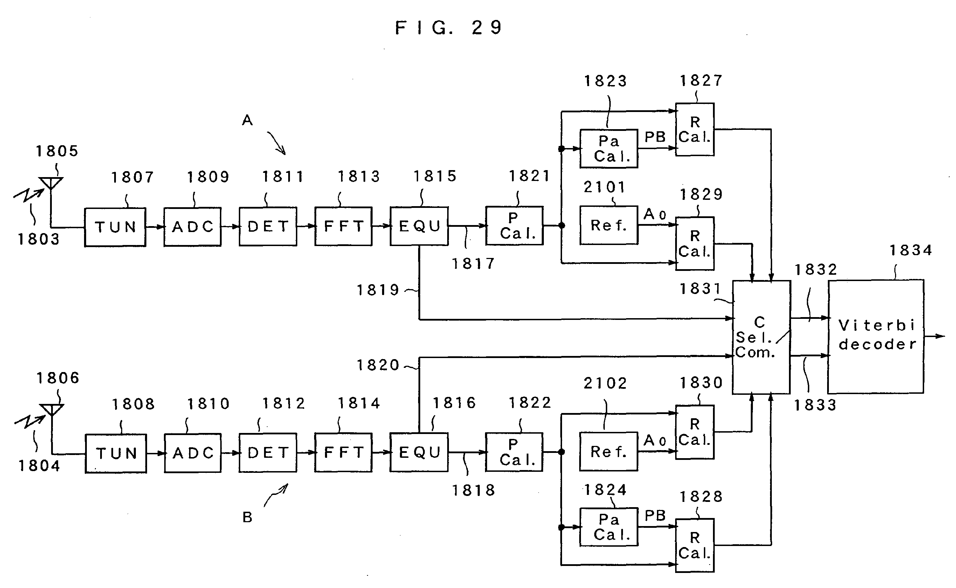

A diversity receiver according to a ninth embodiment of the present invention will be described. The diversity receiver of the ninth embodiment calculates a reliability value which is suitable for diversity and a reliability value which is suitable for Viterbi decoding, respectively while reducing a circuit size and a processing load. Fig. 29 illustrates the structure of the diversity receiver of this embodiment. Referring to Fig. 29, the same portions as those of the seventh and eighth embodiments are indicated by the same reference numerals.

Reference value output sections (reference values) 2101, 2102 respectively have a predetermined reference value A0. This reference value A0 may be freely changed depending on settings. The reliability value Y is calculated with the predetermined reference value A0 being a reference for each of a few levels using certain thresholds. The reference value A0 is a fixed value in accordance with the setting, and thus the reference for calculating the reliability value is not varied. As a result, the reliability value Y which reflects an absolute power can be calculated.

An average power PB calculated, as in the eighth embodiment, from the channel characteristic power for each carrier is used for the reliability value X. The average power PB reflects variations in reception. Thus, even though an absolute power is low, the reliability value X is calculated so as to be a certain degree of reliability.

The carrier selecting/combining section 1831 performs selecting/weighting combining upon a carrier in accordance with the reliability value Y. A reliability value 1833 for Viterbi is obtained by performing selecting or weighting combining upon the reliability value X. The carrier and the reliability value subjected to selecting or weighting combining as described above are outputted to a Viterbi decoder 1834. In the Viterbi decoder, the carrier is weighted with the reliability value for Viterbi and subjected to maximum likelihood decoding.

### (Tenth Embodiment)

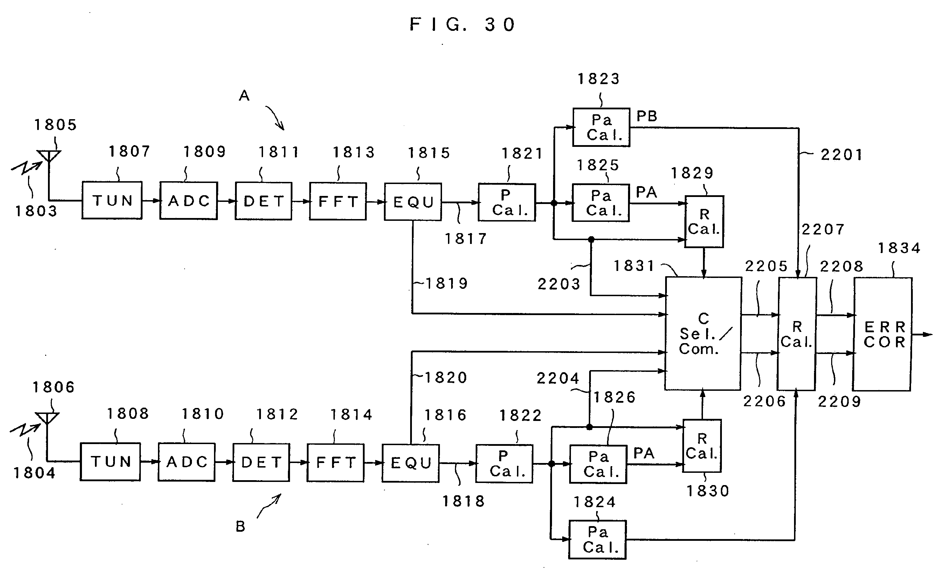

Next, a diversity receiver according to a tenth embodiment of the present invention will be described. Fig. 30 illustrates the structure of the diversity receiver of the tenth embodiment. Referring to Fig. 30, the same portions as those of the seventh to ninth embodiments are denoted by the same reference numerals and descriptions thereof will be omitted. In accordance with the this embodiment, the reliability value X used for weighting at the time of Viterbi decoding is calculated on the basis of the power of channel characteristic for a carrier subjected to diversity.

As well as carriers and reliability values Y in branches, channel characteristic powers 2203, 2204 for each carrier calculated in the power calculators (P calculators) 1821, 1822 are inputted to the carrier selecting/combining section 1831. The carrier selecting/combining section 1831 selects or performs weighting combining for the channel characteristic power and the carrier in accordance with the reliability value Y. As described in the eighth embodiment, weighting combining is performed in accordance with a calculation table that the reliability value Y serves as a parameter. The carrier is similarly processed. The channel characteristic power after diversity is inputted to the reliability value calculator (R calculator) 2207 together with average powers 2201, 2202 for the respective branches.

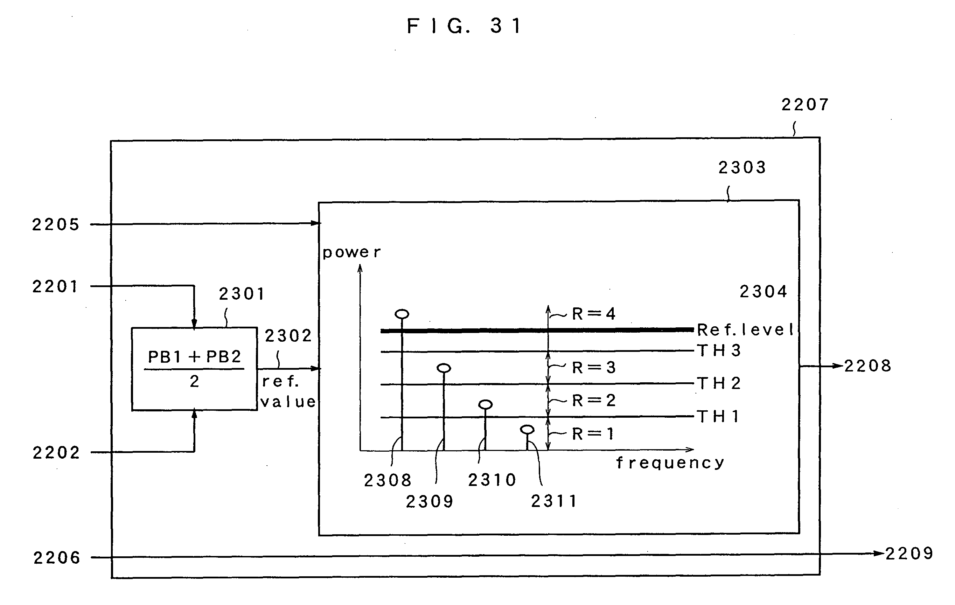

Fig. 31 illustrates a schematic diagram showing the function of the reliability calculator 2207. The reliability calculator 2207 is configured by an average calculator 2301 and a reliability value calculator 2303. An average power 2201 (PB1) of the branch A, an average power 2202 (PB2) of the branch B and a channel characteristic power 2205 for a carrier subjected to diversity are inputted to the reliability calculator 2207. The reliability calculator 2207 calculates a reliability value X (2208).

The average calculator 2301 calculates an average value of the average power PB1 of the branch A and the average power PB2 of the branch B, and applies this result to the reliability calculator 2303 as a reference value 2302. The reliability value calculator 2303 uses this value as a reference level 2304. As in Fig. 25, the reliability value calculator 2303 sets thresholds 1, 2 and 3 by the reference level 2304. The reliability value calculator 2303 compares these thresholds to channel characteristic powers 2308, 2309, 2310 and 2311 of carriers subjected to diversity to calculate the reliability value X. The channel characteristic power 2308 is larger than the threshold 3 and thus its reliability value calculated as "4". Similarly, the reliability value of the power 2309 is calculated as "3", the reliability value of the power 2310 is calculated as "2" and the reliability value of the power 2311 is calculated as "1".

The calculated reliability value X (2208) is outputted to the Viterbi decoder 1834 shown in Fig. 30. As illustrated in Fig. 31, the carrier 2206 subjected to diversity is outputted to the Viterbi decoder 1834 as a carrier 2209. The reliability value 2208 is weighted with the carrier 2209, and maximum likelihood decoding is performed in the Viterbi decoder 1834.

As described above, in accordance with the eighth to tenth embodiments, a reliability value which is suitable for diversity can be calculated. Further, a reliability value for Viterbi decoding can be calculated on the basis of the channel characteristic power of a carrier subjected to diversity.

Orthogonal frequency division multiplexing (OFDM) has been described in the above embodiments. Nevertheless, the present invention may be applied to receiving of signal utilizing a frequency division multiplexing (FDM) system.

It is to be understood that although the present invention has been described with regard to preferred embodiments thereof, various other embodiments and variants may occur to those skilled in the art, which are within the scope and spirit of the invention, and such other embodiments and variants are intended to be covered by the following claims.

The text of Japanese priority applications no. 2002-298419 filed on October 11, 2002 and 2002-333207 filed on November 18, 2002 is hereby incorporated by reference.

## Claims

1. A diversity receiver that receives a frequency division multiplexing signal in which a pilot signal is periodically inserted into a plurality of carriers by using a plurality of antennas and reproduces data using carrier demodulation means formed of a plurality of branches, said diversity receiver comprising:
a tuner which is provided for each branch and tunes said frequency division multiplexing signal in a specified frequency band;
a detector which is provided for each branch and detects the frequency division multiplexing signal obtained by said tuner;
a fast Fourier transformer which is provided for each branch and converts a detected output obtained from said detector by using fast Fourier transform from a time domain signal into a frequency domain signal to reproduce a carrier including a pilot signal;
an equalizer which is provided for each branch, equalizes said carrier obtained by said fast Fourier transformer by using said pilot signal and estimates the channel characteristic of said carrier;
a reliability calculator which is provided for each branch and calculates the reliability value of each carrier on the basis of the state of the pilot signal outputted from said equalizer; and
a carrier selecting/combining section which performs one of selecting and weighting combining for each carrier in each of branches on the basis of the reliability value from said reliability calculator.

2. A diversity receiver according to claim 1, further comprising;
an automatic gain control (hereinafter, referred to as an AGC) section which is provided for each branch and controls a gain of said tuner, wherein
said reliability calculator calculates a reliability value of a carrier from a pilot signal outputted from said equalizer and an AGC value outputted from said AGC section.

3. A diversity receiver according to claim 2, wherein said reliability calculator includes:
a reliability value calculation section which is provided for each branch and calculates a reliability value of a carrier from a pilot signal outputted from said equalizer; and
a reliability value correction section which corrects the reliability value calculated in said reliability value calculation section by an AGC value from said AGC section, and
said carrier selecting/combining section performs one of selecting and weighting combining upon each carrier in accordance with a corrected reliability value in said reliability value correction section.

4. A diversity receiver according to claim 3, wherein
said reliability value correction section inputs an AGC value of said AGC section and a reliability value of said reliability value calculation section to a predetermined correction table for each branch to correct said reliability value on the basis of said correction table.

5. A diversity receiver according to claim 3, wherein
said reliability value correction section excludes a specified carrier by performing correction of reducing the reliability value of the corresponding carrier to zero when said carrier of a branch in which it is determined by an AGC value from said AGC section that a received power is lower than a predetermined reference value.

6. A diversity receiver according to claim 1, further comprising:
an AGC section which is provided for each branch and controls the gain of said tuner, wherein
said carrier selecting/combining section which excludes a carrier of a branch in which it is determined from an AGC value of said AGC section that the received power is lower than a predetermined reference value, and performs one of selecting and weighting combining for each carrier by using the reliability value obtained from said reliability calculator when said received power is equal to or larger than the predetermined reference value.

7. A diversity receiver according to claim 1, further comprising:
an AGC section which is provided for each branch and controls the gain of said tuner; and
a comparator which compares said AGC values for branches and outputs a differential value between AGC values, wherein
said reliability calculator calculates a reliability value of each carrier on the basis of a pilot signal outputted from said equalizer and a differential value between AGC values outputted from said comparator.

8. A diversity receiver according to claim 7, wherein said reliability calculator includes:
a reliability value calculation section which calculates the reliability of each carrier by using the pilot signal outputted from said equalizer; and
a reliability value correction section which corrects, on the basis of a result of comparison by said comparator, a reliability value from said reliability value calculation section by said differential value between AGC values, and
said carrier selecting/combining section performs one of selecting and weighting combining for each carrier in accordance with the corrected reliability value from said reliability value correction section.

9. A diversity receiver according to claim 8, wherein
said reliability value correction section inputs said differential value between AGC values outputted from said comparator and an output from said reliability value calculation section to a predetermined correction table to correct said reliability value on the basis of said correction table.

10. A diversity receiver according to claim 8, wherein
said reliability value correction section excludes a specified carrier by performing correction of reducing the reliability value of a branch with relatively lower received power to zero when said differential value between AGC values outputted from said comparator is equal to or larger than a predetermined threshold.

11. A diversity receiver according to claim 1, further comprising:
an AGC section which is provided for each branch and controls the gain of said tuner; and
a comparator which compares AGC values for branches obtained from said AGC section to output a differential value between AGC values, wherein
said carrier selecting/combining section excludes a carrier of a branch with relatively lower received power when it is determined that said differential value between AGC values outputted from said comparator is equal to or larger than a predetermined threshold, and when said differential value is less than the threshold, performs one of selecting and weighting combining for each carrier by using the reliability value from said reliability calculator.

12. A diversity receiver according to claim 1, further comprising:
a C/N calculator which is provided for each branch and calculates a C/N value by using a carrier outputted from said equalizer, wherein
said reliability calculator calculates a reliability value of each carrier by using a pilot signal outputted from said equalizer and a C/N value outputted from said C/N calculator.

13. A diversity receiver according to claim 12, wherein
said reliability calculator includes:
a reliability value calculation section which is provided for each branch and calculates a reliability value of each carrier by using a pilot signal outputted from said equalizer; and
a reliability value correction section which corrects a reliability value from said reliability value calculation section on the basis of a C/N value from said C/N calculator, and
said carrier selecting/combining section performs one of selecting and weighting combining for each carrier in accordance with the corrected reliability value from said reliability value correction section.

14. A diversity receiver according to claim 13, wherein
said reliability value correction section inputs a C/N value from said C/N calculator and a reliability value from said reliability value calculation section to a predetermined correction table to correct said reliability value in accordance with said correction table.

15. A diversity receiver according to claim 13, wherein
said reliability value correction section excludes a specified carrier by performing correction of reducing the reliability value of a branch in which said C/N value is lower than a predetermined reference value to zero.

16. A diversity receiver according to claim 1, further comprising:
a detector which is provided for each branch and detects said frequency division multiplexing signal obtained by said tuner;
a C/N calculator which is provided for each branch and calculates a C/N value by using a carrier outputted from said equalizer, wherein
said carrier selecting/combining section which excludes a carrier of a branch in which a C/N value calculated in said C/N calculator is lower than a predetermined reference value and, when said C/N value is higher than said predetermined reference value, performs one of selecting and weighting combining for each carrier in accordance with the reliability value from said reliability calculator.

17. A diversity receiver according to claim 1, further comprising:
a C/N calculator which is provided for each branch and calculates a C/N value by using a carrier outputted from said equalizer; and
a comparator which is provided for each branch and compares said C/N values to output a differential value between said C/N values, wherein
said reliability calculator calculates a reliability value of each carrier on the basis of a pilot signal outputted from said equalizer and a differential value between C/N values outputted from said comparator.

18. A diversity receiver according to claim 17, wherein
said reliability calculator includes:
a reliability value calculation section which is provided for each branch and calculates the reliability value of each carrier by using a pilot signal outputted from said equalizer; and
a reliability value correction section which, when it is determined by said comparator that a differential value between C/N values exceeds a threshold, corrects said reliability value calculated by said reliability value calculation section by using said differential value between C/N values, and
said carrier selecting/combining section performs one of selecting and weighting combining for each carrier in accordance with the corrected reliability value from said reliability value correction section.

19. A diversity receiver according to claim 17, wherein
said reliability value correction section inputs the differential value between C/N values obtained in said C/N calculator and an output from said reliability value calculation section to a predetermined correction table to correct said reliability value in accordance with said correction table.

20. A diversity receiver according to claim 18, wherein
said reliability value correction section excludes a specified carrier by performing correction of reducing the reliability value of a branch with relatively inferior C/N value to zero.

21. A diversity receiver according to claim 1, further comprising:
a C/N calculator which is provided for each branch and calculates a C/N value by using a carrier outputted from said equalizer; and
a comparator which compares said C/N values for branches obtained from said C/N calculator to output a differential value between C/N values, wherein
said carrier selecting/combining section, when it is determined by said comparator that said differential values between C/N values is equal to or larger than a threshold, excludes a carrier of a branch which has relatively inferior C/N value to a predetermined reference value and, when said differential value between C/N values is less than the threshold, performs one of selecting and weighting combining upon each carrier in accordance with the reliability value from said reliability calculator.

22. A diversity receiver according to claim 1, further comprising:
a reference value calculator which calculates, for each of said branches, a first reference value for diversity and a second reference value for Viterbi decoding by a received signal power; and
a Viterbi decoder which weights an output from said carrier selecting/combining section to perform maximum likelihood decoding, wherein
said reliability calculator includes: a first reliability calculator which calculates, for each branch, a first reliability value used for diversity by the first reference value; and a second reliability calculator which calculates, for each carrier, a second reliability value used for Viterbi decoding by said second reference value,
said carrier selecting/combining section performs one of selecting and weighting combining upon each carrier in accordance with said first reliability value for each of said branches, and
said Viterbi decoder weights a carrier outputted from said carrier selecting/combining section with said second reliability value to perform maximum likelihood decoding.

23. A diversity receiver according to claim 1, further comprising:
a reference value calculator which calculates, for each of said branches, a first reference value for diversity and a second reference value for Viterbi decoding by a received signal power; and
a Viterbi decoder which weights an output from said carrier selecting/combining section to perform maximum likelihood decoding, wherein
said reliability calculator includes: a first reliability calculator which calculates, for each branch, a first reliability value used for diversity by the first reference value; and a second reliability calculator which calculates, for each carrier, a second reliability value used for Viterbi decoding by said second reference value,
said carrier selecting/combining section performs one of selecting and weighting combining upon each carrier in accordance with said first reliability value for each of said branches, and performs one of selecting and combining said second reliability value in accordance with said first reliability value to convert into a third reliability value; and
said Viterbi decoder weights a carrier outputted from said carrier selecting/combining section with said third reliability value to perform maximum likelihood decoding.

24. A diversity receiver according to claim 23, wherein
said carrier selecting/combining section includes:
a carrier diversity section which performs one of carrier selecting and weighting combining using a first calculation table in accordance with said first reliability value for each of said branches; and
a reliability value diversity section which performs one of selecting and combining said second reliability value using a second calculation table in accordance with said first reliability value for each of said branches to convert into a third reliability value.

25. A diversity receiver according to claim 1, further comprising:
a reference value calculator which calculates, for each branch, a first reference value for diversity and a second reference value for Viterbi decoding by a received signal power;
a Viterbi decoder which weights an output from said carrier selecting/combining section to perform maximum likelihood decoding;
a power calculator which is provided for each branch and calculates the channel characteristic of each carrier by interpolating said pilot signal in time and frequency directions in order to calculate the power of the channel characteristic of each carrier;
a first average power calculator which is provided for each branch and calculates an average power PA for diversity by using an output from said power calculator; and
a second average power calculator which is provided for each branch and calculates an average power PB for Viterbi decoding by using an output from said power calculator, wherein
said reliability calculator includes: a first reliability calculator which calculates, for each branch, a first reliability value used for diversity by the first reference value; and a second reliability calculator which calculates, for each carrier, a second reliability value used for Viterbi decoding by said second reference value,
said carrier selecting/combining section includes: a carrier diversity section which performs one of selecting and weighting combining upon each carrier in accordance with said first reliability value for each branch; and a reliability value diversity section which performs one of selecting and combining upon said second reliability value in accordance with said first reliability value for each branch to calculate a new third reliability value,
said first reliability calculator calculates, for each branch, a first reliability value for each carrier by said channel characteristic power of each carrier with said average power PA serving as a reference,
said second reliability calculator calculates, for each branch, a second reliability value for each carrier by said channel characteristic power of each carrier with said average power PB serving as a reference, and
said Viterbi decoder weights an output from said carrier diversity section with said third reliability value to perform maximum likelihood decoding.

26. A diversity receiver according to claim 25, wherein
said carrier diversity section performs one of selecting and weighting combining for each carrier in accordance with a first calculation table using said first reliability value for each branch, and
said reliability value diversity section performs one of selecting and combining said second reliability value in accordance with a second calculation table using said first reliability value for each branch to calculate a new third reliability value.

27. A diversity receiver according to claim 25, wherein
said first average power calculator calculates the average power PA for diversity by using the channel characteristic outputted from said power calculator, and
said second average power calculator calculates the average power PB for Viterbi decoding by using the channel characteristic outputted from said power calculator.

28. A diversity receiver according to claim 25, wherein
said first average power calculator calculates an average power by average calculation which takes longer time than that in said second average power calculator.

29. A diversity receiver according to claim 25, wherein
said second average power calculator calculates the average power PB by an optional short time average.

30. A diversity receiving method that receives a frequency division multiplexing signal that a pilot signal is periodically inserted into a plurality of carriers by using a plurality of antennas and reproduces data by a carrier demodulation processing formed of a plurality of branches, said method comprising the steps of:
tuning, for each branch, said frequency division multiplexing signal in a specified frequency band;
detecting, for each branch, a frequency division multiplexing signal obtained by said tuning processing;
converting a detected output obtained by said detection processing using a fast Fourier transform from a time domain signal into a frequency domain signal in order to reproduce a carrier including a pilot signal for each branch;
equalizing the carrier obtained by said fast Fourier transform processing by using the pilot signal and estimating the channel characteristic of the carrier for each branch;
calculating, for each branch, the reliability value of the carrier on the basis of the state of a pilot signal obtained by said equalization processing; and
performing one of selecting and weighting combining upon each carrier for each branch on the basis of a reliability value obtained by said reliability calculation processing to output the carrier.

31. A diversity receiving method formed of at according to claim 30, further comprising the steps of:
outputting, for each branch, an AGC signal which controls a gain of a tuner receiving said frequency division multiplexing signal;
correcting, for each branch, said reliability value on the basis of said AGC signal; and
performing one of selecting and weighting combining upon each carrier in accordance with said corrected reliability value.

32. A diversity receiving method according to claim 30, further comprising the steps of:
outputting, for each branch, an AGC signal which controls a gain of a tuner receiving said frequency division multiplexing signal;
comparing said AGC signals to determine whether or not a result of comparison is equal to or larger than a predetermined threshold;
correcting, for each branch, when said result of comparison is larger than the threshold, said reliability value on the basis of said AGC signal; and
performing one of selecting and weighting combining upon each carrier in accordance with said corrected reliability value.

33. A diversity receiving method according to claim 30, further comprising the steps of:
calculating a C/N value by said equalized output for each branch;
correcting said reliability value by said C/N value for each branch; and
performing one of selecting and weighting combining upon each carrier in accordance with said corrected reliability value.

34. A diversity receiving method according to claim 30, further comprising the steps of:
calculating a C/N value by said equalized output for each branch;
comparing said C/N values of said branches;
determining whether or not said result of comparison exceeds a predetermined threshold and, when said result exceeds said threshold, correcting said reliability value in accordance with said result of comparison for each branch; and
performing one of selecting and weighting combining upon each carrier in accordance with said corrected reliability value.
